(19) **Europäisches Patentamt / European Patent Office / Office européen des brevets**

(11) **EP 2 393 044 A1**

(12) **DEMANDE DE BREVET EUROPEEN**

(43) Date de publication:
**07.12.2011 Bulletin 2011/49**

(21) Numéro de dépôt: **10184928.9**

(22) Date de dépôt: **24.07.2006**

(51) Int Cl.:
*G06K 19/077* (2006.01)    *G06K 7/10* (2006.01)
*H01Q 7/08* (2006.01)    *H01Q 1/22* (2006.01)
*H01Q 1/44* (2006.01)    *G06K 19/07* (2006.01)
*G06K 7/00* (2006.01)    *H01F 5/00* (2006.01)
*H01Q 7/00* (2006.01)

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK RS**

(30) Priorité: **01.02.2006 FR 0600937**
**22.07.2005 FR 0507861**
**22.07.2005 FR 0507863**
**23.08.2005 FR 0508696**
**23.08.2005 FR 0508699**
**25.11.2005 FR 0512108**
**25.11.2005 FR 0512109**
**25.11.2005 FR 0512110**

(62) Numéro(s) de document de la (des) demande(s) initiale(s) en application de l'article 76 CBE:
**06808816.0 / 1 911 125**

(71) Demandeur: **Winstead Assets Ltd.**
**Roadtown Tortola (VG)**

(72) Inventeurs:
• **Folcke, Georges**
**91370, Verrières-Le-Buisson (FR)**
• **Gout, Eric**
**91370, Verrières-Le-Buisson (FR)**
• **Raoult, Christophe**
**91370, Verrières-Le-Buisson (FR)**

(74) Mandataire: **den Braber, Gerard Paul**
**PROXIP**
**Tour CIT/CIT Tower**
**Bureau 717/Suite 717**
**3 Rue de l'Arrivée**
**75749 Paris cedex 15 (FR)**

Remarques:
Cette demande a été déposée le 30-09-2010 comme demande divisionnaire de la demande mentionnée sous le code INID 62.

(54) **produit conducteur comportant une étiquette électronique**

(57) Le produit comporte une pièce métallique sensiblement plane au moins localement, et une étiquette électronique dont l'antenne est positionnée à proximité de ladite pièce métallique, l'axe de ladite antenne étant parallèle au plan local de ladite pièce métallique.

Préférentiellement, l'antenne de ladite étiquette électronique est positionnée à proximité et parallèlement à un bord de ladite pièce métallique.

**EP 2 393 044 A1**

**Description**

La présente invention concerne un produit conducteur comportant une étiquette électronique, un procédé et un dispositif d'identification de tels produits. Elle s'applique, en particulier, à l'identification à distance de blisters métallisés en mettant en oeuvre une identification radiofréquence, connue sous le nom de RFID (acronyme de RadioFrequence IDentification).

L'identification à distance par ondes électromagnétiques met en oeuvre un lecteur, aussi appelé station de base et une étiquette électronique, aussi appelée transpondeur ou tag, associée à chaque produit à identifier. Chaque étiquette électronique conserve un code d'identification, généralement unique, par exemple constitué de 64 données binaires, formant un code dont la structure et la signification sont normalisées. Pour lire une étiquette électronique, la station de base émet un champ électromagnétique modulé pour porter un signal d'interrogation et, éventuellement, pour alimenter les étiquettes électroniques. A réception de ce signal d'interrogation, chaque étiquette électronique détermine si elle doit répondre et ce qu'elle doit répondre. Par exemple, seules des étiquettes électroniques dont le code d'identification commence par des données indiquées, explicitement ou implicitement, par la station de base, doivent répondre et elles doivent répondre en fournissant une ou des données complémentaires de leur code d'identification. Dans d'autres exemples, on met en oeuvre un protocole anti-collision dans lequel chaque étiquette électronique détermine, par exemple aléatoirement, à quel moment elle doit répondre, de manières à réduire le risque que deux étiquettes électroniques répondent simultanément, provoquant une interférence de leurs signaux de réponse et gênant la bonne réception de ces signaux par la station de base.

Comme on le comprend aisément, la présence de pièces conductrices, par exemple des pièces ou films métalliques ou comportant une forte proportion d'eau, perturbe les champs électromagnétiques utilisés et limitent, voire interdisent, la communication entre la station de base et les étiquettes électroniques.

La présente invention vise à remédier à ces inconvénients.

A cet effet, la présente invention vise, selon un quinzième aspect, un produit comportant une pièce métallique sensiblement plane au moins localement, caractérisé en ce qu'il comporte une étiquette électronique dont l'antenne est positionnée à proximité de ladite pièce métallique, l'axe de ladite antenne étant parallèle au plan local de ladite pièce métallique.

Grâce à chacune de ces dispositions, le champ magnétique parallèle au plan de la pièce métallique peut être capté par l'antenne de l'étiquette électronique. Chaque étiquette électronique peut ainsi être lue, même lorsque plusieurs produits similaires se trouvent en pile.

Selon des caractéristiques particulières, l'antenne de ladite étiquette électronique est positionnée à proximité et parallèlement à un bord de ladite pièce métallique.

Grâce à ces dispositions, les perturbations dues à la présence de la pièce métallique sont réduites au niveau de l'étiquette électronique.

Selon des caractéristiques particulières, ladite pièce métallique est un film métallique de blister.

Grâce à ces dispositions, les blisters de petites dimensions peuvent néanmoins être munis d'une étiquette électronique pratiquement invisible.

Selon des caractéristiques particulières, le produit tel que succinctement exposé ci-dessus comporte une rigole formée dans un matériau non conducteur, parallèle et à proximité d'un bord de la ladite pièce métallique, l'antenne de ladite étiquette électronique étant positionnée dans ladite rigole.

Grâce à ces dispositions, l'étiquette électronique peut être facilement déposée en automatique dans le blister en même temps que sont déposés les éléments de contenu, par exemple cachets ou gélules, conservées par le blister.

Selon des caractéristiques particulières, ladite étiquette électronique comporte :

- un noyau de matériau isolant électrique possédant une perméabilité magnétique relative supérieure à cinquante,
- un bobinage entourant ledit noyau, bobinage formant une antenne adaptée à recevoir un signal d'interrogation de la part d'une station de base,
- une mémoire conservant un code d'identification et
- des moyens de traitement adaptés à traiter le signal d'interrogation en provenance de la station de base, à déterminer si l'étiquette électronique doit répondre et, si oui, à commander l'émission d'un signal par ladite antenne.

Grâce à ces dispositions, la sensibilité de l'antenne est multipliée en fonction de la perméabilité magnétique relative du matériau constituant le noyau, valeur qui peut dépasser 250, voire 650, pour un noyau en ferrite, par rapport à la même antenne sans noyau de ferrite.

Selon des caractéristiques particulières, ledit noyau comporte une ferrite. Grâce à ces dispositions, le gain de sensibilité peut être très élevé, les ferrites présentant de très hautes perméabilités magnétiques.

Selon des caractéristiques particulières, le fil de bobinage est thermo-adhérent. Grâce à ces dispositions, le bobinage est de réalisation aisée.

Selon des caractéristiques particulières, ladite étiquette est passive. Grâce à ces dispositions, sont coût de revient, son encombrement et son poids peuvent être réduits et sa durée de vie peut être augmentée.

Selon un seizième aspect, la présente invention vise un dispositif d'identification d'au moins un produit tel que succinctement exposé ci-dessus, produit comportant une pièce métallique sensiblement plane, caractérisé en ce qu'il comporte une antenne émettrice adaptée à générer des lignes de champ magnétique parallèles à l'axe de ladite antenne de l'étiquette électronique.

Grâce à ces dispositions, les produits peuvent être identifiés dans un large volume.

Selon des caractéristiques particulières, le dispositif tel que succinctement exposé ci-dessus comporte un moyen de présentation pour présenter un produit à la fois en regard de ladite antenne émettrice de telle manière que le plan de ladite pièce métallique soit perpendiculaire au plan principal de ladite antenne émettrice et que le noyau de l'étiquette électronique portée par ledit produit soit sensiblement parallèle aux lignes de champs générées par ladite antenne émettrice.

Selon des caractéristiques particulières, le dispositif tel que succinctement exposé ci-dessus comporte un moyen de présentation pour présenter une pluralité de produits constituant au moins une pile en regard de ladite antenne émettrice de telle manière que le plan de chaque pièce métallique soit perpendiculaire au plan principal de ladite antenne émettrice et que les noyaux des étiquettes électroniques portées par lesdits produits soient sensiblement parallèles aux lignes de champs générées par ladite antenne émettrice.

Selon des caractéristiques particulières, ledit moyen de présentation est un convoyeur.

Grâce à chacune de ces dispositions, les produits peuvent être identifiés en piles.

Selon un autre aspect, la présente invention vise un procédé d'identification d'au moins un produit comportant une pièce métallique sensiblement plane, caractérisé en ce qu'il comporte :

- une étape d'association mécanique audit produit d'une étiquette électronique dont l'antenne est perpendiculaire au plan de ladite pièce mécanique et

une étape de positionnement dudit produit en regard d'une antenne émettrice de la station de base pour que l'antenne émettrice génère des lignes de champ magnétique parallèles à l'axe de ladite antenne de l'étiquette électronique.

Les avantages, buts et caractéristiques de ce procédé étant similaires à ceux du dispositif tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif en regard des dessins annexés dans lesquels :

- la figure 1 représente, schématiquement, en vue de dessus un premier mode de réalisation d'un inducteur conforme à la présente invention ;
- la figure 2 représente, schématiquement, en vue de dessus, un deuxième mode de réalisation d'un inducteur conforme à la présente invention ;
- la figure 3 représente, schématiquement, en perspective, l'intensité d'un champ magnétique généré par le deuxième mode de réalisation de la présente invention, tel qu'illustré en figure 2 ;
- la figure 4 représente, schématiquement, en vue de dessus, un troisième mode de réalisation d'un inducteur conforme à la présente invention ;
- la figure 5 représente, schématiquement, en vue de dessus un quatrième mode de réalisation d'un inducteur conforme à la présente invention ;
- la figure 6 représente, schématiquement, en perspective, un cinquième mode de réalisation d'un inducteur conforme à la présente invention ;
- la figure 7 représente, schématiquement, en vue de dessus, un sixième mode de réalisation d'un inducteur conforme à la présente invention ;
- la figure 8 représente, schématiquement, en vue de dessus, un septième mode de réalisation d'un inducteur conforme à la présente invention ;
- la figure 9 représente, schématiquement, en perspective, une palette conforme à la présente invention ;
- la figure 10 représente, schématiquement, en perspective, un conteneur conforme à la présente invention ;
- la figure 11 représente, schématiquement, en coupe, un convoyeur conforme à la présente invention ;
- la figure 12 représente, schématiquement, en coupe, une caisse enregistreuse conforme à la présente invention ;
- la figure 13 représente, schématiquement, en coupe, une station de base conforme à la présente invention ;
- la figure 14 représente, schématiquement, un exemple de mise en oeuvre de la présente invention dans un système de lecture d'étiquettes électroniques radiofréquences ;
- les figures 15A et 15B représentent un circuit électronique intégré dans une étiquette électronique ;
- la figure 16 représente un logigramme de fonctionnement d'une étiquette électronique ;
- la figure 17 représente un chronogramme de fonctionnement d'étiquettes électroniques ;

- la figure 18 représente, schématiquement, en perspective, un mode de réalisation particulier d'un inducteur conforme à la présente invention ;
- la figure 19 représente, schématiquement, en vue de côté, un convoyeur comportant un inducteur illustré en figure 18 ;
- la figure 20 représente, schématiquement, en vue de côté, une station de base comportant un inducteur illustré en figure 18 ;
- la figure 21 représente, schématiquement, un premier mode de réalisation d'un rayonnage conforme à la présente invention ;
- la figure 22 représente, schématiquement, un deuxième mode de réalisation d'un rayonnage conforme à la présente invention ;
- la figure 23 représente, schématiquement, une première forme d'antenne incorporée dans un rayonnage illustré en figures 21 ou 22 ;
- la figure 24 représente, schématiquement, une deuxième forme d'antenne incorporée dans un rayonnage illustré en figures 21 ou 22 ;
- la figure 25 représente, schématiquement, une troisième forme d'antenne incorporée dans un rayonnage illustré en figures 21 ou 22 ;
- la figure 26 représente un produit particulièrement adapté à être stocké dans un rayonnage tel qu'illustré en figure 21 ;
- la figure 27 représente, sous forme d'un logigramme, le fonctionnement d'un rayonnage tel qu'illustré en figures 21 ou 22 ;
- la figure 28 représente un système informatique conforme à la présente invention et comportant une pluralité de rayonnages tels qu'illustrés en figures 21 ou 22 ;
- la figure 29 représente un organigramme de fonctionnement du système informatique illustré en figure 28 ;
- la figure 30 représente, schématiquement, un exemple de mise en oeuvre de la présente invention dans un système de lecture d'étiquettes électroniques radiofréquences ;
- la figure 31 représente un circuit de génération d'horloge intégré dans une station de base;
- les figures 32A et 32B représentent un circuit logique intégré dans une station de base ;
- la figure 33 représente, en coupe, l'intégration d'une étiquette électronique dans une pompe de flacon de parfum comportant des parties métalliques ;
- la figure 34 représente un circuit électronique d'étiquette électronique conforme à la présente invention ;
- la figure 35 représente la forme d'un signal sortant du circuit illustré en figure 34 ;
- la figure 36 représente un spectre de signal présent sur l'étiquette électronique au moment de sa réponse à un signal d'interrogation ;
- la figure 37 représente, schématiquement, des fréquences préférentiellement mises en oeuvre par des antennes du dispositif illustré en figures 30 à 36 ;
- la figure 38 représente, schématiquement, un mode de réalisation particulier d'un circuit électronique de réception d'une station de base du dispositif illustré en figures 30 à 37 ;
- la figure 39 représente, schématiquement, en vue de dessus, un mode de réalisation particulier d'une étiquette électronique objet de la présente invention ;
- la figure 40 représente un faisceau de courbes utiles pour déterminer une perméabilité magnétique réelle en fonction d'un ratio de longueur et de diamètre d'une ferrite et en fonction d'une perméabilité magnétique asymptotique ;
- les figures 41A et 41 B représentent, schématiquement, en vue de dessus et en vue de côté, un mode de réalisation particulier d'un produit selon la présente invention ;
- la figure 42 représente, schématiquement, un mode de réalisation particulier d'un dispositif d'identification objet de la présente invention et
- la figure 43 représente, sous forme d'un logigramme, des étapes mises en oeuvre dans un mode de réalisation particulier du procédé objet de la présente invention.

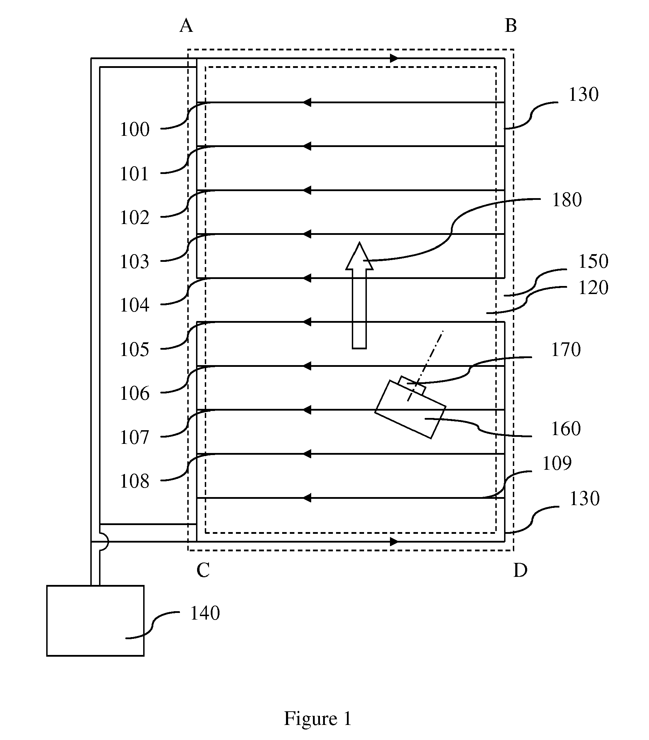

Les figures 1 à 13 concernent plus particulièrement les premier et deuxième aspects de la présente invention. Dans toute la description des figures 1 à 13, on n'a pas représenté les moyens de démodulation de signaux provenant d'étiquettes électroniques, actives ou passives, ces moyens étant bien connus de l'homme du métier.

On observe, en figure 1, des premiers conducteurs 100 à 109 linéaires parallèles entre eux et répartis sur une surface plane 120, reliés entre eux par des conducteurs de liaison 130 pour former deux brins de circuit électrique, les extrémités desdits brins étant reliés à une alimentation électrique 140. Les conducteurs sont incorporés dans un socle plein non conducteur 150 sur lequel peuvent être posés des articles 160 munis d'étiquettes électroniques 170 dont l'antenne est dans un plan formant un angle inférieur ou égal à 45° avec l'axe des premiers conducteurs.

Lorsque l'alimentation électrique alimente les brins de circuit comportant les premiers conducteurs, le courant électrique circule dans le même sens dans les premiers conducteurs, par exemple dans le sens indiqué par les flèches placés sur les premiers conducteurs. L'ensemble des premiers conducteurs génère alors un champ magnétique, au dessus de la surface 120, qui est, au centre de cette surface, parallèle à la flèche 180.

A cet effet, le courant électrique qui parcourt le brin supérieur passe successivement par les points et les premiers conducteurs suivants : A, B, 100, A, B, 101, A, B, 102, A, B, 103, A, B, 104 et A. Le brin inférieur est symétrique au brin supérieur.

Ainsi, l'inducteur illustré en figure 1 comporte une pluralité de premiers conducteurs parallèles entre eux, au moins trois des premiers conducteurs étant sensiblement à la même distance entre eux et répartis sur une surface, et une alimentation électrique des conducteurs qui fait circuler un courant électrique dans le même sens dans les conducteurs.

Dans le premier mode de réalisation, illustré en figure 1, les premiers conducteurs sont linéaires et répartis uniformément sur la surface 120, qui est plane et les conducteurs de liaison sont forment des spires partiellement superposées avec les premiers conducteurs, sur chacune des moitiés de la surface 120.

Dans des variantes, les premiers conducteurs ne sont pas uniformément répartis sur la surface 120 (voir les deuxième et quatrième modes de réalisation), ne sont pas linéaires, ne sont pas coplanaires et/ou ne forment pas des spires avec les conducteurs de liaison (voir les troisième et quatrième modes de réalisation).

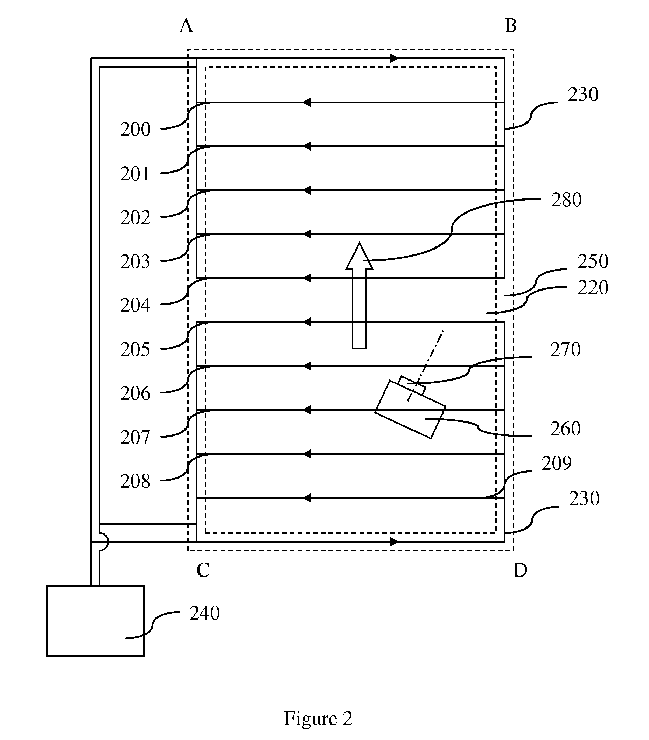

On observe, en figure 2, des premiers conducteurs 200 à 209 linéaires parallèles entre eux et répartis, par groupes, sur une surface plane 220, reliés entre eux par des conducteurs de liaison 230 pour former deux brins de circuit électrique, les extrémités dudit brin étant reliés à une alimentation électrique 240. Les conducteurs sont incorporés dans un socle plein non conducteur 250 sur lequel peuvent être posés des articles 260 munis d'étiquettes électroniques 270 dont l'antenne est dans un plan formant un angle inférieur ou égal à 45° avec l'axe des premiers conducteurs.

Lorsque l'alimentation électrique alimente les brins de circuit comportant les premiers conducteurs, le courant électrique circule dans le même sens dans les premiers conducteurs, par exemple dans le sens indiqué par les flèches placés sur les premiers conducteurs. L'ensemble des premiers conducteurs génère alors un champ magnétique, au dessus de la surface 220, qui est, au centre de cette surface, parallèle à la flèche 280.

A cet effet, le courant électrique qui parcourt le brin supérieur passe successivement par les points et les premiers conducteurs suivants : A, B, 200, A, B, 200, A, B, 200, A, B, 200, A, B, 201, A, B, 201, A, B, 201, A, B, 202, A, B, 202, A, B, 202, A, B, 203, A, B, 203, A, B, 204, A, B, 204 et A. Le brin inférieur est symétrique au brin supérieur.

Ainsi, l'inducteur illustré en figure 2 comporte une pluralité de premiers conducteurs parallèles entre eux, au moins trois des premiers conducteurs étant sensiblement à la même distance entre eux et répartis sur une surface, et une alimentation électrique des conducteurs qui fait circuler un courant électrique dans le même sens dans les conducteurs.

Dans le deuxième mode de réalisation, illustré en figure 2, les premiers conducteurs sont regroupés de telle manière que, à proximité des bords de la surface 220 et des conducteurs de liaison formant spires, le nombre de premiers conducteurs soit plus élevé que vers le centre de la surface 220. En d'autres termes, les premiers conducteurs sont plus densément répartis aux extrémités de la surface les comportant et moins densément répartis au centre de la surface les comportant.

Dans l'exemple représenté en figure 2, quatre premiers conducteurs sont regroupés pour former les spires les plus petites, puis trois conducteurs sont regroupés pour former les spires suivantes, puis trois conducteurs sont regroupés pour former les spires suivantes, puis deux conducteurs sont regroupés pour former les autres spires.

Cette configuration par groupe permet de rendre le champ magnétique plus uniforme à proximité de la surface 220 qu'à proximité de la surface 120.

Dans le deuxième mode de réalisation, les premiers conducteurs sont linéaires et répartis sur la surface 220, qui est plane et les conducteurs de liaison sont forment des spires partiellement superposées avec les premiers conducteurs, sur chacune des moitiés de la surface 220.

Dans des variantes, les premiers conducteurs sont uniformément répartis sur la surface 220 (voir les premier et troisième modes de réalisation), ne sont pas linéaires, ne sont pas coplanaires et/ou ne forment pas des spires avec les conducteurs de liaison (voir les troisième et quatrième modes de réalisation).

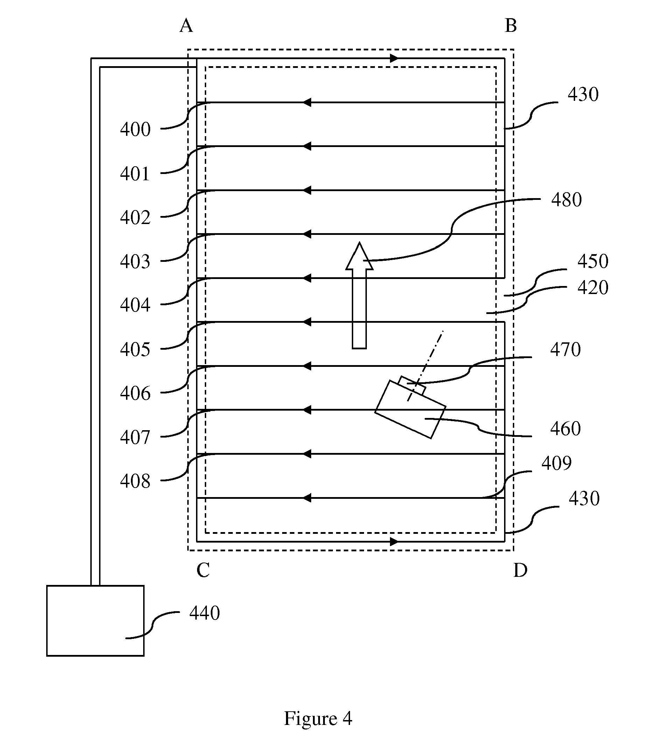

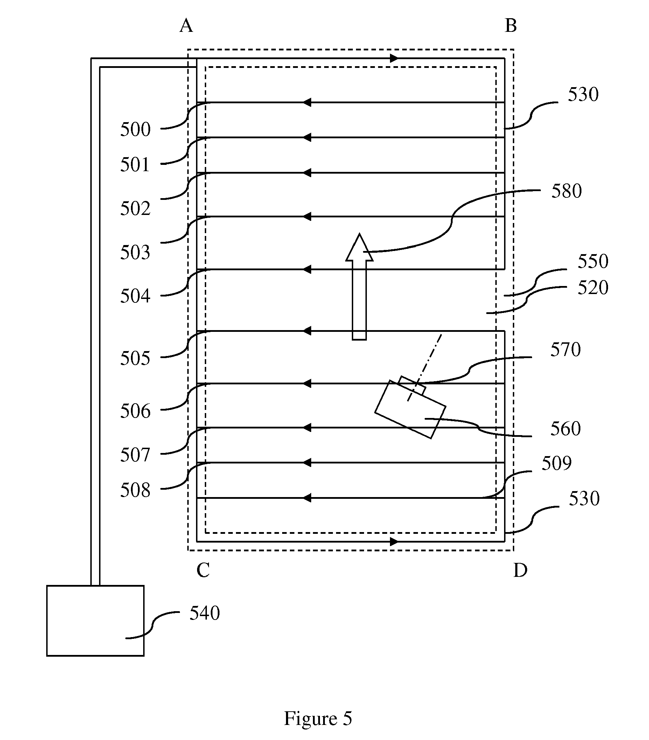

Par rapport aux troisième et quatrième modes de réalisation illustrés en figures 4 et 5, les premiers et deuxièmes modes de réalisation mettent en oeuvre moins de longueur de conducteurs de liaison, à dimensions de la surface 220 égale.

En ce qui concerne les premier et deuxième mode de réalisation, de par leur symétrie, les brins supérieurs et inférieurs sont faiblement couplées du point de vue électromagnétique, ce qui réduit les pertes d'énergie.

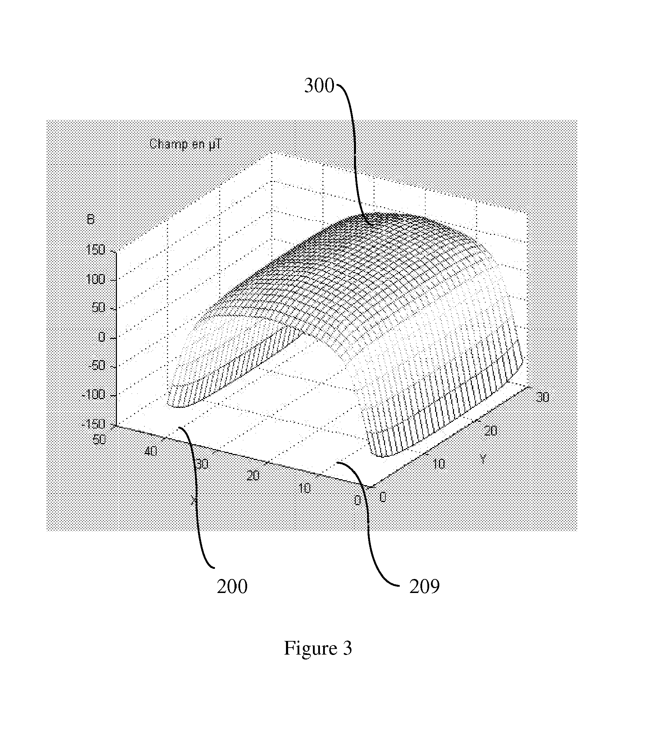

On observe, en figure 3, dans une vue en trois dimensions, l'intensité 300 de la composante du champ magnétique selon l'axe des X, c'est à dire l'axe parallèle à la surface comportant les premiers conducteurs et perpendiculaire à ces premiers conducteurs. Cette intensité, représentée par la hauteur, c'est-à-dire sur l'axe des B, est donnée pour chaque point de la surface 220, représentée sur les axes de X et des Y, à une distance constante de la surface 220.

On observe que l'intensité du champ magnétique est sensiblement uniforme sur une grande partie de la surface 220. Par exemple, la ligne des intensités égales à la moitié de l'intensité maximale atteint l'ensemble des premiers conducteurs.

On observe, en figure 4, des premiers conducteurs 400 à 409 linéaires parallèles entre eux et répartis sur une surface plane 420, reliés entre eux par des conducteurs de liaison 430 pour former un brin de circuit électrique, les extrémités dudit brin étant reliés à une alimentation électrique 440. Les conducteurs sont incorporés dans un socle plein non conducteur 450 sur lequel peuvent être posés des articles 460 munis d'étiquettes électroniques 470 dont l'antenne est dans un plan formant un angle inférieur ou égal à 45° avec l'axe des premiers conducteurs.

Lorsque l'alimentation électrique alimente le brin de circuit comportant les premiers conducteurs, le courant électrique circule dans le même sens dans les premiers conducteurs, par exemple dans le sens indiqué par les flèches placés sur les premiers conducteurs. L'ensemble des premiers conducteurs génère alors un champ magnétique, au dessus de la surface 420, qui est, au centre de cette surface, parallèle à la flèche 480.

A cet effet, le courant électrique qui parcourt le brin passe successivement par les points et les premiers conducteurs suivants : A, B, 400, C, D, 409, A, B, 401, C, D, 408, A, B, 402, C, D, 407, A, B, 403, C, D, 406, A, B, 404, C, D, 405 et A.

Ainsi, l'inducteur illustré en figure 4 comporte une pluralité de premiers conducteurs parallèles entre eux, au moins trois des premiers conducteurs étant sensiblement à la même distance entre eux et répartis sur une surface, et une alimentation électrique des conducteurs qui fait circuler un courant électrique dans le même sens dans les conducteurs.

Dans le troisième mode de réalisation, illustré en figure 4, les premiers conducteurs sont linéaires et répartis uniformément sur la surface 420, qui est plane et les conducteurs de liaison sont alternativement reliés aux extrémités de la surface, de telle manière qu'ils ne forment pas des spires partiellement superposées avec les premiers conducteurs.

Dans des variantes, les premiers conducteurs ne sont pas uniformément répartis sur la surface 420 (voir les premier, deuxième et quatrième modes de réalisation), ne sont pas linéaires, ne sont pas coplanaires et/ou forment des spires avec les conducteurs de liaison (voir les premier et deuxième modes de réalisation).

On observe, en figure 5, des premiers conducteurs 500 à 509 linéaires parallèles entre eux et répartis sur une surface plane 520, reliés entre eux par des conducteurs de liaison 530 pour former un brin de circuit électrique, les extrémités dudit brin étant reliés à une alimentation électrique 540. Les conducteurs sont incorporés dans un socle plein non conducteur 550 sur lequel peuvent être posés des articles 560 munis d'étiquettes électroniques 570 dont l'antenne est dans un plan formant un angle inférieur ou égal à 45° avec l'axe des premiers conducteurs.

Lorsque l'alimentation électrique alimente le brin de circuit comportant les premiers conducteurs, le courant électrique circule dans le même sens dans les premiers conducteurs, par exemple dans le sens indiqué par les flèches placés sur les premiers conducteurs. L'ensemble des premiers conducteurs génère alors un champ magnétique, au dessus de la surface 520, qui est, au centre de cette surface, parallèle à la flèche 580.

A cet effet, le courant électrique qui parcourt le brin passe successivement par les points et les premiers conducteurs suivants : A, B, 500, C, D, 509, A, B, 501, C, D, 508, A, B, 502, C, D, 507, A, B, 503, C, D, 506, A, B, 504, C, D, 505 et A.

Ainsi, l'inducteur illustré en figure 5 comporte une pluralité de premiers conducteurs parallèles entre eux, au moins trois des premiers conducteurs étant sensiblement à la même distance entre eux et répartis sur une surface, et une alimentation électrique des conducteurs qui fait circuler un courant électrique dans le même sens dans les conducteurs.

Dans le quatrième mode de réalisation, illustré en figure 5, les premiers conducteurs sont linéaires, ne sont pas répartis uniformément sur la surface 520, qui est plane et les conducteurs de liaison sont alternativement reliés aux extrémités de la surface, de telle manière qu'ils ne forment pas des spires partiellement superposées avec les premiers conducteurs.

Dans le quatrième mode de réalisation, illustré en figure 5, les premiers conducteurs sont plus proches entre eux à proximité des bords de la surface 520 et plus éloignés entre eux vers le centre de la surface 520. En d'autres termes, les premiers conducteurs sont plus densément répartis aux extrémités de la surface les comportant et moins densément répartis au centre de la surface les comportant.

Les troisièmes et quatrièmes modes de réalisation, illustrés en figures 4 et 5 présentent l'avantage de posséder une faible inductance par rapport aux premiers et deuxièmes modes de réalisation illustrés en figures 1 et 2.

Dans des variantes, les premiers conducteurs sont uniformément répartis sur la surface 520 (voir les premier et troisième modes de réalisation), ne sont pas linéaires, ne sont pas coplanaires et/ou forment des spires avec les conducteurs de liaison (voir les premier et deuxième modes de réalisation).

On observe que, dans les modes de réalisation où les conducteurs de liaison forment des spires avec les premiers conducteurs, les premiers conducteurs peuvent, comme dans le mode de réalisation illustré en figure 5, être écartés entre eux avec des distances variables, préférentiellement plus réduites aux extrémités de la surface qu'en son centre.

Réciproquement, dans les modes de réalisation où les conducteurs de liaison ne forment pas des spires avec les premiers conducteurs, les premiers conducteurs peuvent, comme dans le mode de réalisation illustré en figure 2, être regroupés entre eux avec des nombres de premiers conducteurs par groupe variables, préférentiellement plus élevés aux extrémités de la surface qu'en son centre.

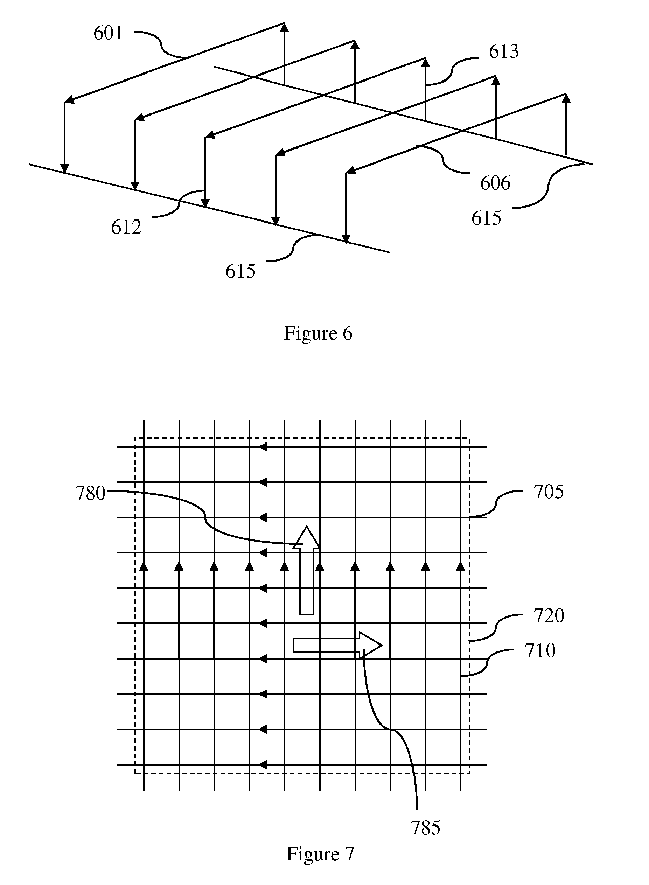

On observe, en figure 6, les premiers conducteurs (seuls les premiers conducteurs 601 à 606 sont ici représentés), reliés, par des conducteurs de liaisons 612, 613 et 615. Les premiers conducteurs sont dans l'une des configurations illustrées en figures 1, 2, 4 ou 5, ou dans l'une de leurs variantes. Les conducteurs de liaison 612, 613 et 615 sont d'un même côté d'un plan comportant les premiers conducteurs Les conducteurs de liaison possèdent deux parties linéaires, de part et d'autre des premiers conducteurs, respectivement 612 et 613. Les parties linéaires 612 sont coplanaires et les parties linéaires 613 sont coplanaires.

Ces parties 612 et 613 génèrent au dessous des premiers conducteurs, lorsqu'elles sont parcourues par un courant, un champ magnétique parallèle au champ magnétique généré par le courant parcourant les premiers conducteurs. Le champ magnétique totale est ainsi renforcé en regard des extrémités des premiers conducteurs.

On observe, en figure 7, dans une surface 720, des premiers conducteurs 705, parallèles entre eux, parcourus dans le même sens lorsque l'alimentation électrique (non représentée) les alimente et des deuxièmes conducteurs 710, parallèles entre eux, parcourus dans le même sens lorsque l'alimentation électrique les alimente, les deuxièmes conducteurs étant perpendiculaires aux premiers conducteurs et coplanaires avec eux.

L'alimentation électrique est adaptée à générer un courant alternativement sur les premiers et deuxièmes conducteurs, générant ainsi, au dessus de la surface 720, alternativement des champs magnétiques illustrés par les flèches 780 et 785, respectivement.

Des étiquettes électroniques dont les antennes sont perpendiculaires à la surface 720 peuvent donc toujours être lues, que ce soit lors l'alimentation des premiers conducteurs 705 et/ou lors de l'alimentation des deuxièmes conducteurs 710.

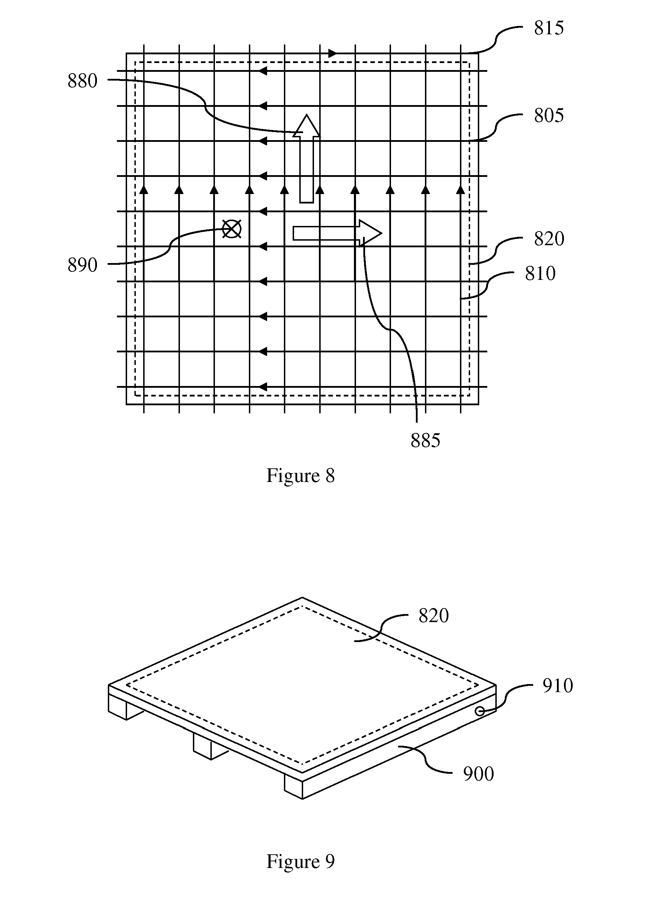

On observe, en figure 8, dans une surface 820, des premiers conducteurs 805, parallèles entre eux, parcourus dans le même sens lorsque l'alimentation électrique (non représentée) les alimente et des deuxièmes conducteurs 810, parallèles entre eux, parcourus dans le même sens lorsque l'alimentation électrique les alimente, les deuxièmes conducteurs étant perpendiculaires aux premiers conducteurs et coplanaires avec eux.

Autour de la surface 820 se trouvent des troisièmes conducteurs 815 formant des spires carrées alimentées par l'alimentation électrique.

L'alimentation électrique est adaptée à générer un courant alternativement sur les premiers, deuxièmes et troisièmes conducteurs, générant ainsi, au dessus de la surface 820, alternativement des champs magnétiques illustrés par les flèches 880 et 885 et 890, respectivement.

Quelle que soit l'orientation de leur antenne, des étiquettes électroniques peuvent donc toujours être lues, que ce soit lors l'alimentation des premiers conducteurs 805, lors de l'alimentation des deuxièmes conducteurs 810 et/ou lors de l'alimentation des troisièmes conducteurs 815.

Le mode de réalisation illustré en figure 8 permet la réalisation d'un lecteur « 3D » puisque les étiquettes peuvent être lues quelle que soit leur orientation et leur position sur la surface 820. Ce lecteur est très plat et peut être facilement inclus dans des supports variés (tables, étagères, cloisons pour la gestion de produits en stock notamment...).

En ce qui concerne les modes de réalisation illustrés en figures 7 et 8, de par leur symétrie, les brins comportant les premiers, deuxièmes et, éventuellement, troisièmes conducteurs, ne sont pas couplées du point de vue électromagnétique. Il n'y a donc pas de perte d'énergie lorsque l'on associe ces trois types d'antenne.

Les différents modes de réalisation de la présente invention sont très bien adaptés à l'identification de piles d'un grand nombre d'étiquettes (particulièrement les étiquettes ne fonctionnant pas à la résonance) parallèles et très proches les unes des autres. La structure en peigne de part son champ très uniforme permet un couplage optimal de l'énergie à une pile d'étiquettes même très compacte. Le lecteur décrit plus haut permet l'identification de pile de 40 étiquettes. Un lecteur en forme de « 8 » de même surface ne permet pas ce type de performance.

Dans la suite de la description, on a représenté le septième mode de réalisation de l'inducteur illustré en figure 8. Cependant, ce mode de réalisation n'est donné qu'à titre d'exemple, les autres modes de réalisation et leurs variantes pouvant, de manière similaire être intégrés dans des palettes, des conteneurs, des convoyeurs, des caisses enregistreuses ou des stations de base.

On observe, en figure 9, une palette 900 comportant, dans sa surface supérieure, une surface 820 munie des premiers, deuxièmes et troisièmes conducteurs et reliés à l'extérieur de la palette 900 par une prise 910 permettant à une alimentation externe, d'alimenter alternativement ces premiers, deuxièmes et troisièmes conducteurs.

Cette palette 900 présente l'avantage de permettre la lecture des étiquettes des objets qu'elle supporte, sans avoir à les déplacer entre des antennes d'une station de base.

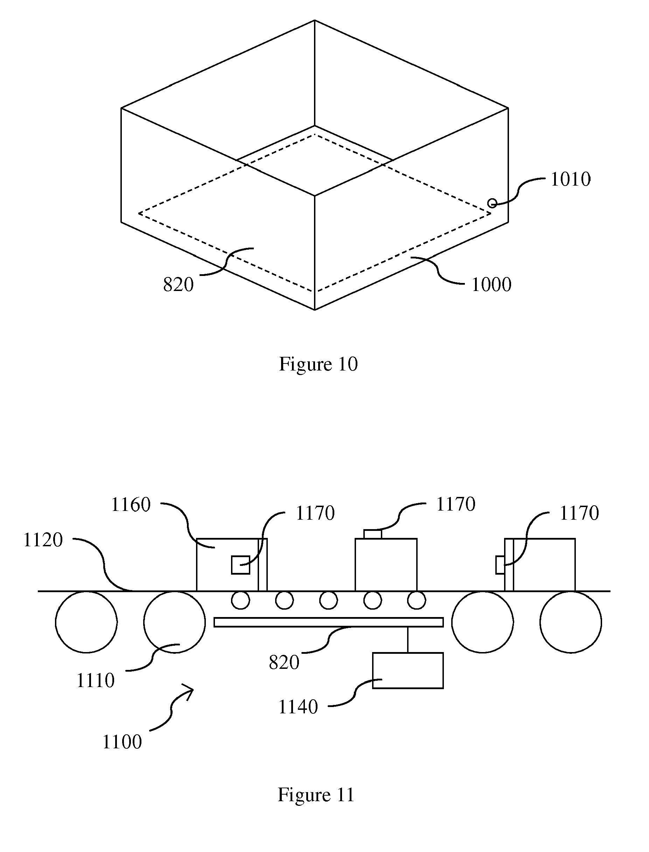

On observe, en figure 10, un containeur ou une caisse 1000 comportant, dans sa surface inférieure, une surface 820 munie des premiers, deuxièmes et troisièmes conducteurs et reliés à l'extérieur du containeur 1000 par une prise 1010 permettant à une alimentation externe, d'alimenter alternativement ces premiers, deuxièmes et troisièmes conducteurs.

Ce containeur 1000 présente l'avantage de permettre la lecture des étiquettes des objets qu'il contient, sans avoir à les déplacer entre des antennes d'une station de base.

On observe, en figure 11, un convoyeur 1100 comportant, en dessous de sa surface de convoyage, ici matérialisée par des rouleaux 1110 supportant une bande souple 1120, une surface 820 munie des premiers, deuxièmes et troisièmes conducteurs et reliés à une alimentation électrique 1140 qui alimente alternativement ces premiers, deuxièmes et troisièmes conducteurs.

Ce convoyeur 1100 présente l'avantage de permettre la lecture des étiquettes 1170 des objets 1160 qu'il transporte, quelle que soit l'orientation de leurs antennes et sans gêner le passage de ces objets 1160.

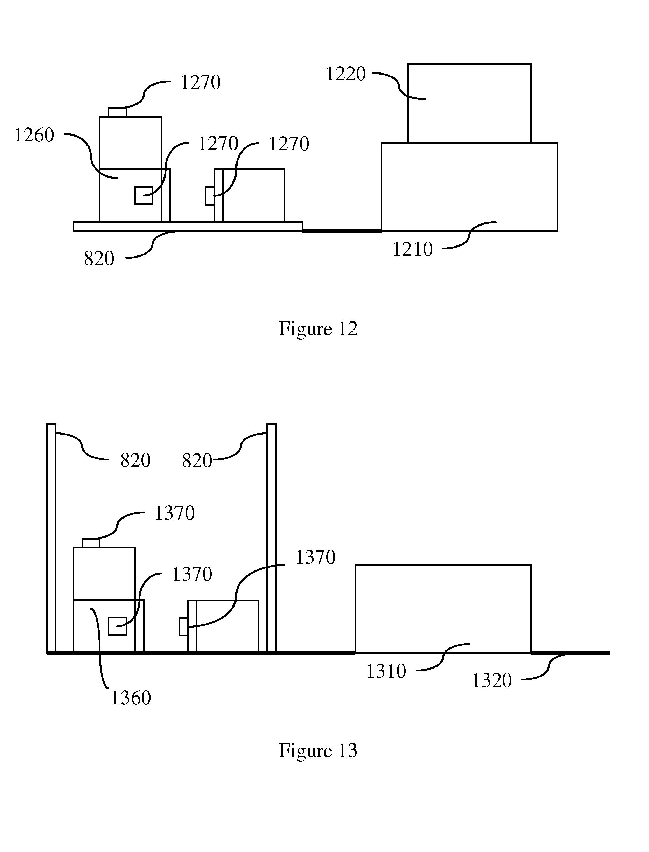

On observe, en figure 12, une caisse enregistreuse 1210 comportant un écran d'affichage 1220 et reliée à un socle comportant une surface 820 munie des premiers, deuxièmes et troisièmes conducteurs et reliés à une alimentation électrique (non représentée) incorporée dans la caisse enregistreuse, qui alimente alternativement ces premiers, deuxièmes et troisièmes conducteurs.

Cette caisse enregistreuse 1210 présente l'avantage de permettre la lecture des étiquettes 1270 des objets 1260 qui sont posés sur le socle, quelle que soit l'orientation de leurs antennes et sans se limiter à des dimensions particulières de ces objets.

La présente invention permet ainsi l'identification automatique de produits empilés, notamment à la caisse d'un magasin.

On observe, en figure 13, une station de base 1310 reliée à deux surfaces 820 verticales munies, chacune, des premiers, deuxièmes et troisièmes conducteurs et reliés à une alimentation électrique (non représentée) incorporée dans la station de base, qui alimente alternativement ces premiers, deuxièmes et troisièmes conducteurs, de manière corrélé pour que le champ magnétique entre les surfaces 820 soit aussi uniforme que possible.

Cette base station 1310 présente l'avantage de permettre la lecture des étiquettes 1370 des objets 1360 qui sont entre les surfaces 820, quelle que soit l'orientation de leurs antennes ou leur position entre les surfaces 820.

La présente invention permet ainsi de constituer différentes formes de supports qui comportent l'inducteur objet de la présente invention. Ce support, qui permet la lecture d'étiquettes électroniques dont l'antenne est orientée dans n'importe quelle direction présente l'avantage notable d'être très plat et donc, de pouvoir se poser sur ou s'incorporer dans tout plan de travail, comptoir, table, plateau ou étagère.

La présente invention ne se limite pas aux modes de réalisation décrits et représentés, ou à leurs variantes, mais s'étend, bien au contraire, aux modes de réalisation de la présente invention à la portée de l'homme du métier.

Lors de son utilisation avec une fréquence de signal parcourant les conducteurs de 125 KHz, on peut utiliser, pour constituer les conducteurs, du fil de section de 1 mm$^2$ standard bâtiment, à un seul conducteur pour minimiser l'effet de peau à ladite fréquence.

On observe que l'inducteur objet de la présente invention est particulièrement destinée à fonctionner avec des fréquences inférieures à 30 MHz.

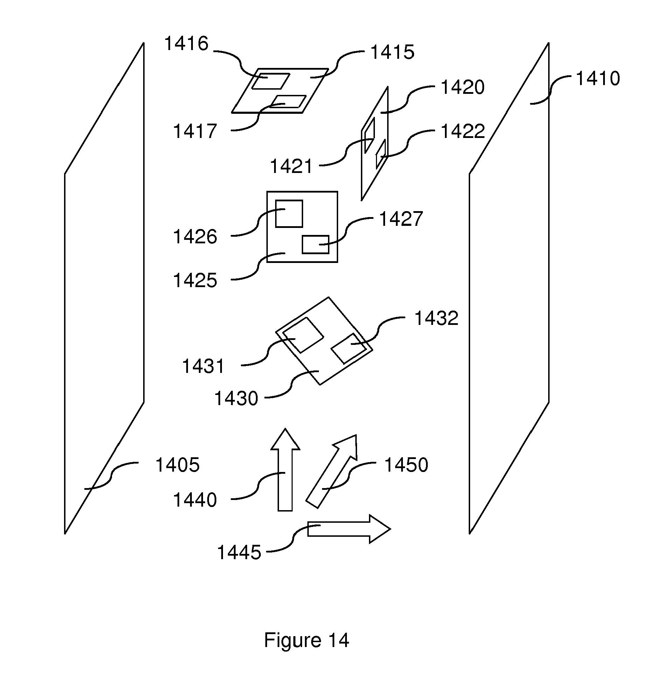

Les figures 14 à 17 concernent plus particulièrements les troisième à cinquième aspects de la présente invention. On observe, en figure 14, un ensemble d'antennes 1405 et 1410 d'une station de base (non représentée) et des étiquettes électroniques passives 1415, 1420, 1425 et 1430 placées entre l'ensemble d'antennes 1405 et 1410. La station de base alimente successivement les antennes de l'ensemble d'antennes 1405 et 1410 pour générer successivement, au cours d'un cycle de lecture, un champ magnétique vertical symbolisé par la flèche 1440, un champ magnétique latéral symbolisé par la flèche 1445 et un champ magnétique longitudinal symbolisé pare la flèche 1450.

Les étiquettes électroniques sont alimentées par le champ électromagnétique généré par l'ensemble d'antennes 1405 et 1410 lorsque le plan de leur antenne coupe suffisamment de lignes de champ magnétique.

Dans la configuration représentée, l'étiquette électronique 1415 est alimentée par le champ magnétique 1440, l'étiquette 1420 par le champ magnétique 1445, l'étiquette 1425 par le champ magnétique 1450 et l'étiquette 1430 par chacun des champs magnétiques 1440, 1445 et 1450.

Chacune des étiquettes 1415, 1420, 1425 et 1430 comporte un moyen de communication, respectivement 1416, 1421, 1426 et 1431, avec la station de base et un moyen d'inhibition prolongée, respectivement 1417, 1422, 1427 et 1432.

Les moyens de communication sont adaptés à répondre à des requêtes émises, par l'intermédiaire des champs magnétiques successifs, par la station de base afin d'être identifiées par cette station de base. Les moyens d'inhibition prolongée 1417, 1422, 1427 et 1432 sont adaptés à inhiber la réponse aux requêtes d'interrogation une fois que l'étiquette correspondante est complètement identifiée, pendant une durée au moins égale à un cycle de lecture complet, même en l'absence d'alimentation de l'étiquette électronique correspondante par un champ magnétique, de telle manière qu'une étiquette électronique ne risque pas d'être identifiée successivement par le biais des champs magnétiques successivement générés par l'ensemble d'antennes 1405 et 1410.

Grâce à cette caractéristique essentielle, chaque étiquette électronique ne peut être lue qu'au plus une seule fois par cycle de lecture, ce qui améliore grandement le nombre d'étiquettes électroniques qui peuvent être identifiées par unité de temps.

Au contraire, dans l'art antérieur, lorsqu'elles n'étaient plus alimentées, les étiquettes n'étaient rapidement plus inhibées et répondaient aux requêtes d'identification de la station de base dès qu'elles étaient, de nouveau, alimentées, provoquant une pluralité d'identification successives de la même étiquette électronique au cours d'un même cycle de lecture et donc une perte de temps et de vitesse d'identification.

En effet, hormis les orientations particulières des étiquettes électroniques 1415, 1420 et 1425, les orientations quelconques des étiquettes électroniques les rendent lisibles par le biais de plusieurs champs magnétiques successifs, comme c'est la cas pour l'étiquette électronique 1430.

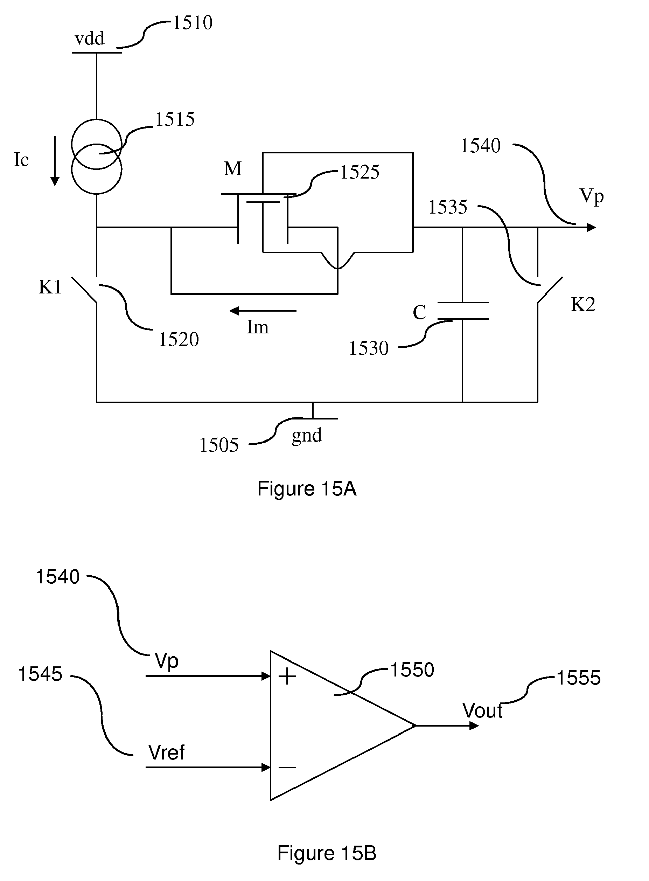

On observe, en figures 15A et 15B, le montage d'un transistor MOS 1525, monté en diode c'est-à-dire que le drain est connecté à la source et que la grille est connecté au substrat.

A la mise sous tension, l'interrupteur K1 1520 est fermé, la capacité C 1530 est déchargée. Dès que l'étiquette est identifiée, l'interrupteur K1 1520 se ferme permettant à la capacité C 1530 de se charger, au travers du transistor 1525, à courant constant généré par la source de courant Ic 1515.

L'interrupteur K2 1535 permet, à tout moment, de faire une remise a zéro de l'information d'inhibition prolongée stockée dans la capacité 1530, c'est-à-dire de sortir de l'état d'inhibition prolongée.

Le niveau stocké dans la capacité C 1530 est présent sur le point Vp 1540 permettant de réaliser une comparaison du potentiel Vp 1540 avec une tension fixe de référence Vref 1545. Le signal présent en sortie Vout 1555 du comparateur 1550 est la remise en forme du signal Vp 1540 et représente l'état d'inhibition prolongée de l'étiquette électronique.

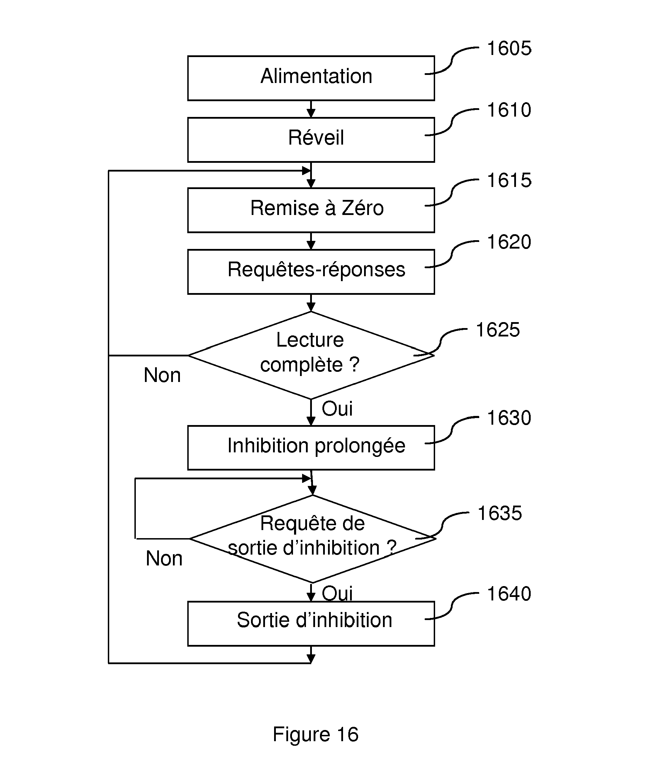

On observe, en figure 16, les étapes de fonctionnement d'une étiquette électronique selon la présente invention.

L'étiquette électronique passive se réveille lorsqu'elle reçoit un champ magnétique suffisant pour son alimentation, étape 1605.

Au cours d'une étape 1610, elle s'initialise, par exemple en mettant à zéro des compteurs. Au cours d'une étape 1615 elle reçoit un signal de remise à zéro de la part d'une station de base, par le biais d'un champ magnétique de lecture, généralement identique au champ magnétique d'alimentation.

Au cours d'une étape 1620, elle répond aux requêtes émises par la station de base et fourni, en une ou plusieurs parties, son identification. Eventuellement, au cours de cette étape 1620, elle s'inhibe provisoirement pour ne pas répondre à des requêtes qui concernent l'identification d'autres étiquettes électroniques.

Au cours d'une étape 1625, l'étiquette électronique détermine si elle a été complètement identifiée, soit en fonction des réponses qu'elle a émis, soit après réception d'un signal d'accusé de réception de la part de la station de base, par exemple sous la forme d'une simple impulsion ou sous la forme d'un message répétant l'intégralité de l'identification de l'étiquette concernée.

Si le résultat de l'étape 1625 est négatif, ce qui peut, par exemple, arrivé si l'étiquette n'a pas correctement reçu toutes les requêtes émises par la station de base à son attention ou si la station de base n'a pas correctement reçu les réponses émises par l'étiquette électronique, l'étiquette retourne à l'étape 1615 et attend une nouvelle requête de remise à zéro.

Si le résultat de l'étape 1625 est positif, au cours d'une étape 1630, l'étiquette électronique se met en inhibition prolongée jusqu'à ce qu'elle reçoive une requête de sortie d'inhibition prolongée, étape 1635 ou jusqu'à ce que son moyen d'inhibition prolongé ne puisse plus maintenir de signal d'inhibition prolongée, cette inhibition prolongée pouvant atteindre une durée au moins égale à la durée d'un dit cycle de lecture, même en l'absence de toute alimentation électrique provenant de ladite station de base.

Si elle reçoit une requête de sortie d'inhibition prolongée, l'étiquette électronique sort de l'état d'inhibition prolongée, étape 1640, et retourne à l'étape 1615. Si l'énergie conservée par le moyen d'inhibition, par exemple par la capacité 1530, est épuisée, l'étiquette se remet en sommeil jusqu'à ce qu'une étape 1605 survienne.

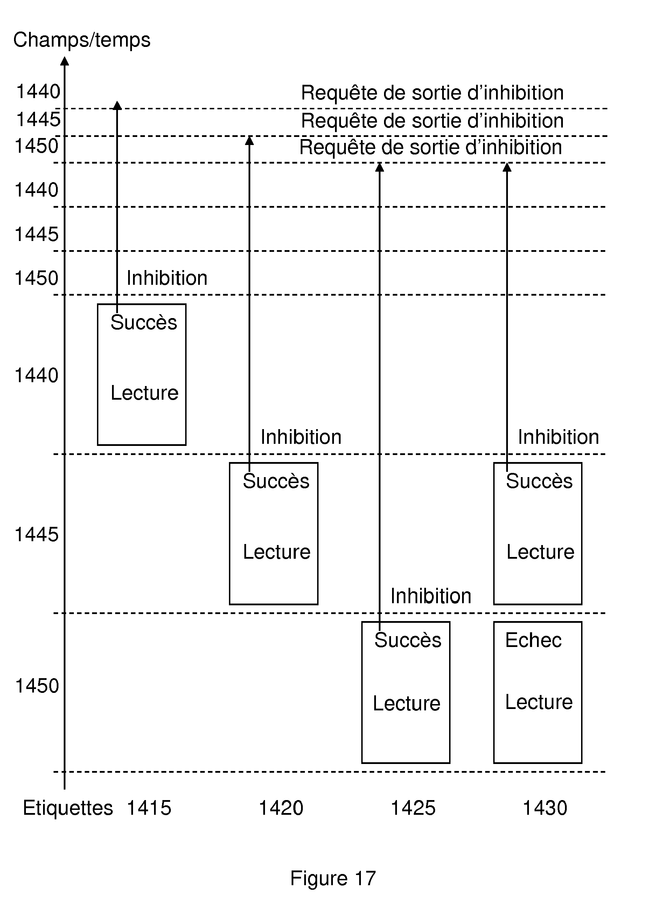

On observe, en figure 17, successivement, sur un axe des temps allant de bas en haut, que le champ magnétique 1450 est d'abord émis pour identifier des étiquettes électroniques se trouvant dans ledit champ. Au cours de cette phase du cycle de lecture, l'étiquette électronique 1425 est complètement identifiée et on suppose ici que l'étiquette électronique 1430, alimentée par le champ magnétique 1450 n'est pas complètement identifié, par exemple du fait de son orientation ou de défauts de communication entre elle et la station de base. L'étiquette électronique 1425 entre alors en inhibition prolongée qui peut durer au moins la durée un cycle complet de lecture mettant en oeuvre les différentes combinaisons d'antennes prévues dans ce cycle.

Une fois que la station de base a identifié les étiquettes électroniques capables de communiquer correctement par le biais du champ magnétique 1450, le champ magnétique 1445 est émis et l'étiquette électronique 1420 est complètement identifiée. Du fait de son inhibition prolongée, même si elle est alimentée par le champ magnétique 1445 et qu'elle reçoit les requêtes émises par la station de base, l'étiquette électronique 1425 ne répond pas à ces requêtes ni à la remise à zéro émise par la station de base.

On suppose ici que l'étiquette électronique 1430 est aussi complètement identifiée au cours de la phase d'émission du champ magnétique 1445.

Dès qu'elles sont complètement identifiées, les étiquettes électroniques 1420 et 1430 entrent en inhibition prolongée qui peut durer au moins la durée un cycle complet de lecture mettant en oeuvre les différentes combinaisons d'antennes prévues dans ce cycle.

Une fois que la station de base a identifié les étiquettes électroniques capables de communiquer correctement par le biais du champ magnétique 1445, le champ magnétique 1440 est émis et l'étiquette électronique 1415 est complètement identifiée. Du fait de leur inhibition prolongée, même si elles sont alimentées par le champ magnétique 1440 et qu'elles reçoivent les requêtes émises par la station de base, les étiquettes électroniques 1420, 1425 et 1430 ne répondent pas à ces requêtes ni à la remise à zéro émise par la station de base.

Dès qu'elle est complètement identifiée, l'étiquette électronique 1415 entre en inhibition prolongée qui peut durer au moins la durée un cycle complet de lecture mettant en oeuvre les différentes combinaisons d'antennes prévues dans ce cycle.

On suppose ici que la station de base n'émet pas de requête de sortie d'inhibition prolongée tant que des étiquettes restent à identifier. La station de base effectue donc un nouveau cycle de lecture, en mettant en oeuvre, successivement, les champs magnétiques 1450, 1445 et 1440 et n'identifie aucune nouvelle étiquette électronique.

Puis la station de base émet une requête de sortie d'inhibition prolongée, par le biais de chacun des champs magnétiques 1450, 1445 et 1440 et toutes les étiquettes sortent de l'inhibition prolongée et se mettent en attente d'une remise à zéro pour reproduire un cycle de lecture. Cette étape d'émission d'une requête de sortie d'inhibition prolongée est, par exemple, effectuée pour vérifier que les étiquettes électroniques sont toujours présentes à portée de la station de base ou pour désinhiber toute étiquette électronique qui aurait pu venir à portée de la station de base dans un état d'inhibition prolongée, par exemple sous l'effet d'une lecture par une autre station de base.

On observe que les étiquettes sortent de l'état d'inhibition prolongée lorsqu'elles reçoivent la requête de sortie. Ainsi, du fait de leurs orientations particulières, les étiquettes électroniques 1420 et 1415 sortent de l'état d'inhibition prolongée plus tard que les étiquettes électroniques 1425 et 1430.

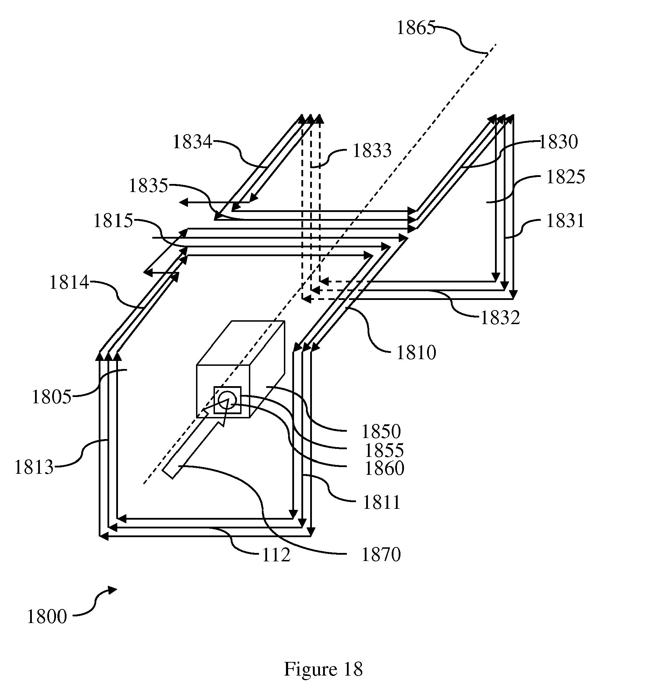

Les figures 18 à 20 concernent plus particulièrement les sixième à huitième aspects de la présente invention. On observe, en figure 18, un inducteur 1800 comportant deux torons 1805 et 1825 en forme de boucles non planes et un produit 1850 portant une étiquette électronique 1855 comportant une antenne plane 1860. Chaque boucle du toron 1805 comporte, pour chaque conducteur, six segments de droite 1810 à 1815 et chaque boucle du toron 1825 comporte, pour chaque conducteur six segments de droite 1830 à 1835. L'ensemble des deux torons 1805 et 1825 est réalisé à partir d'un seul conducteur qui parcourt successivement les boucles 1805 et 1825. En figure 18 ne sont représentés que trois parcours de chaque toron par le même conducteur, dans un but de clarté de la figure. Cependant, le nombre de parcours de chaque toron est préférentiellement beaucoup plus élevé afin de générer un champ électromagnétique de forte intensité.

En figure 18, le conducteur parcourt d'abord trois fois le toron 1805 puis trois fois le toron 1825. Dans des variantes, le conducteur parcours alternativement les torons 1805 et 1825, par exemple pour former une couche de conducteurs de l'un des torons avant de former une couche de conducteurs de l'autre toron avant de passer à la couche suivante.

Comme on le comprend aisément, à tout moment, le courant circule avec des sens de rotations inversés sur les deux torons. Par exemple, en figure 18, alors que le courant circule, vue de dessus, dans le sens des aiguilles du montre sur le toron 1805, il circule dans le sens inverse des aiguilles d'une montre sur le toron 1825.

En figure 18, chaque boucle non plane de chaque toron est majoritairement contenue dans la réunion de deux plans orthogonaux, l'un horizontal et l'autre vertical.

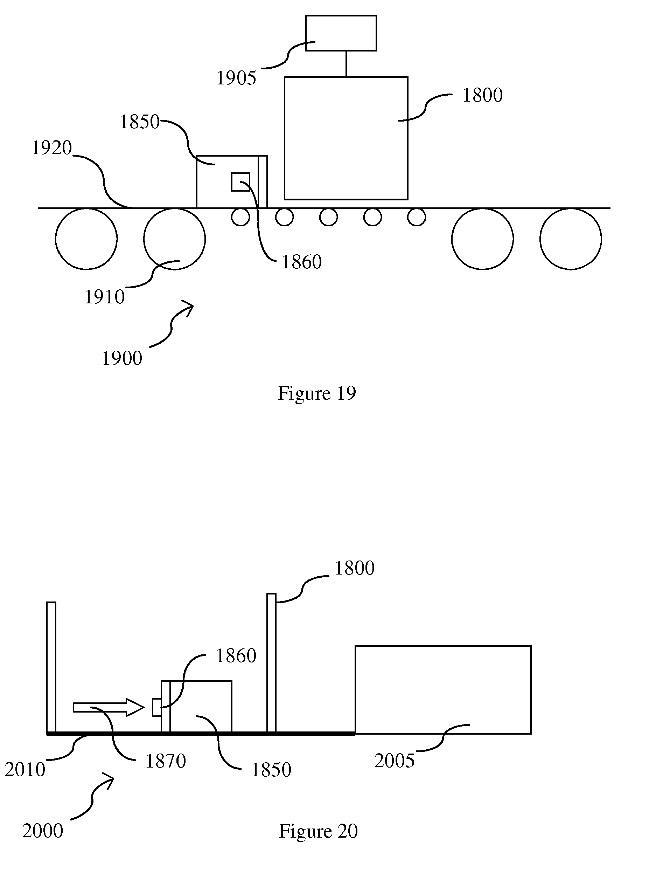

Le produit 1850 est de type quelconque. Il est associé à une étiquette électronique ou transpondeur 1855, par exemple de type « RFID ». Le plan de l'antenne plane 1860 de l'étiquette électronique est orientée sensiblement parallèlement aux segments de droite 1811, 1812, 1813, 1815, 1831, 1832, 1833 et 1835 et sensiblement perpendiculairement aux segments de droite 1810, 1814, 1830 et 1834. Par exemple, le produit 1850 est déplacé par un convoyeur (voir figure 19) ou un tapis roulant parallèlement aux segments 1812, 1815, 1832 et 1835 de telle manière qu'il passe dans l'arche formée par l'inducteur 1800.

L'orientation de l'axe de l'antenne 1860 de chaque étiquette électronique 1855 est sensiblement parallèle à un axe 1865 passant par les deux boucles. Ainsi, l'inductance mutuelle entre l'inducteur 1800 et l'antenne 1860 de l'étiquette électronique 1855 est élevée lors du passage de l'étiquette électronique 1855 dans l'arche constituée par l'inducteur 1800, son antenne 1860 étant sensiblement perpendiculaire aux lignes de champ, illustrées par la flèche 1870.

On observe, en figure 19, en vue de côté, un convoyeur 1900 comportant un inducteur 1800 tel qu'illustré en figure 18 et des circuits électroniques 1905 de génération de signaux appliqués à l'inducteur 1800 et de traitement de signaux provenant de l'inducteur 1800 pour identifier les étiquettes électroniques 1855 et les produits 1850 et, éventuellement, écrire en mémoire de ces étiquettes électroniques 1855.

Le convoyeur 1900 comporte, en dessus de sa surface de convoyage, ici matérialisée par des rouleaux 1910 supportant une bande souple 1920, l'inducteur 1800. Le convoyeur transporte le produit 1850 de telle manière que l'orientation de l'axe de l'antenne 1860 de chaque étiquette électronique 1855 soit sensiblement parallèle à un axe passant par les deux boucles. Ainsi, la lecture de l'étiquette électronique 1855 est effectuée lors de son passage sous l'inducteur 1800, son antenne 1860 étant alors sensiblement perpendiculaire aux lignes de champ générées par l'inducteur 1800.

Ce convoyeur 1900 présente l'avantage de permettre la lecture des étiquettes 1855 des produits 1850 qu'il transporte lors de leur passage sous l'inducteur 1800.

On observe, en figure 20, une station de base 2000 comportant un inducteur 1800 tel qu'illustré en figure 18 et des circuits électroniques 2005 de génération de signaux appliqués à l'inducteur 1800 et de traitement de signaux provenant de l'inducteur 1800 pour identifier les étiquettes électroniques 1855 et les produits 1850 et, éventuellement, écrire en mémoire de ces étiquettes électroniques 1855.

La station de base 2000 comporte, en dessous et autour d'une support 2010 de produits 1850, l'inducteur 1800 tourné vers le haut. Les produits 1850 à identifier sont positionnés, par exemple par un manutentionnaire, un vendeur un client ou un agent de sécurité, sur le support 2010 de telle manière que l'orientation de l'axe de l'antenne 1860 de chaque étiquette électronique 1855 soit sensiblement parallèle à un axe passant par les deux boucles. Ainsi, la lecture de l'étiquette électronique 1855 est effectuée lors de pose du produits 1850 sur le support 2010 et au-dessus de l'inducteur 1800, l'antenne 1860 de l'étiquette électronique 1855 étant alors sensiblement perpendiculaire aux lignes de champ générées par l'inducteur 1800.

La présente invention permet ainsi de constituer différentes formes de supports qui comportent le transducteur objet de la présente invention. Ce support, qui permet la lecture d'étiquettes électroniques dont l'antenne est orientée dans n'importe quelle direction présente l'avantage notable de pouvoir s'incorporer dans un plan de travail, un comptoir ou étagère.

La présente invention permet aussi l'identification automatique de produits empilés dont les antennes d'étiquettes électroniques sont parallèles.

La présente invention ne se limite pas aux modes de réalisation décrits et représentés, ou à leurs variantes, mais s'étend, bien au contraire, aux modes de réalisation de la présente invention à la portée de l'homme du métier.

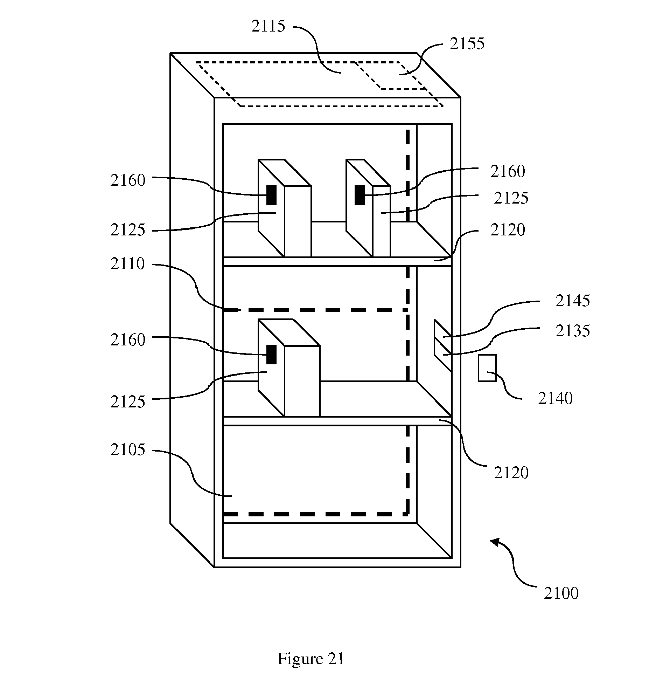

Les figures 21 à 29 concernent plus particulièrement les neuvième et dixième aspects de la présente invention. On observe, en figure 21, un rayonnage 2100 comportant, dans ou sur sa paroi de fond 2105, une antenne 2110, dans sa partie supérieure, des circuits électroniques 2115, des étagères 2120 portants des produits 2125 munis d'étiquettes électroniques 2160, un moyen de communication 2155, un lecteur 2135 de carte d'identification 2140 et un afficheur 2145.

Le rayonnage 2100 et les étagères 2120 sont constitués en des matériaux rigides, par exemple du bois, du verre ou une matière plastique.

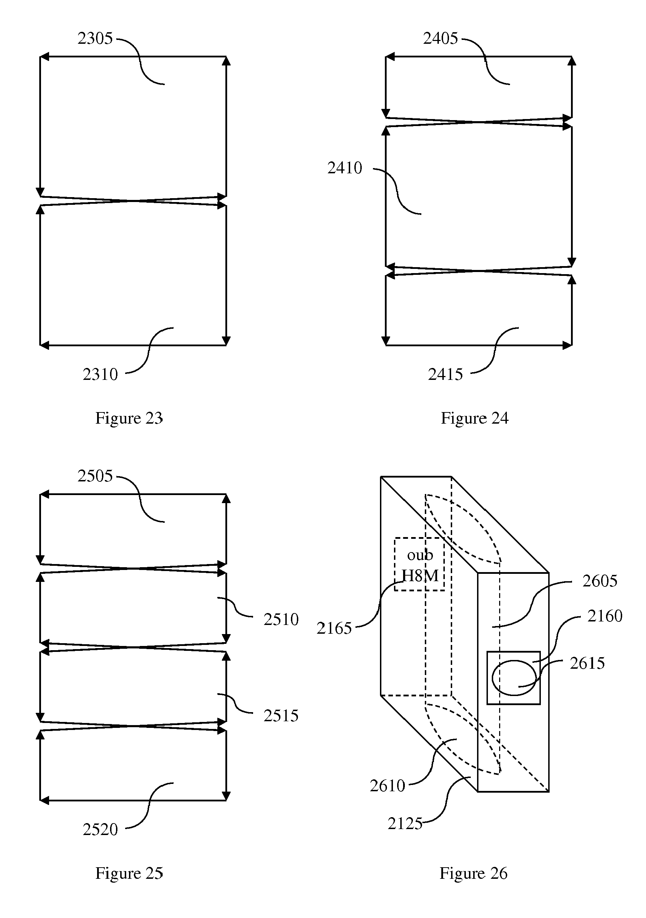

L'antenne 2110 est liée à la paroi de fond 2105, par exemple par collage, agrafage ou inclusion. L'antenne 2110 possède l'une des formes d'antenne illustrées en figures 23 à 25.

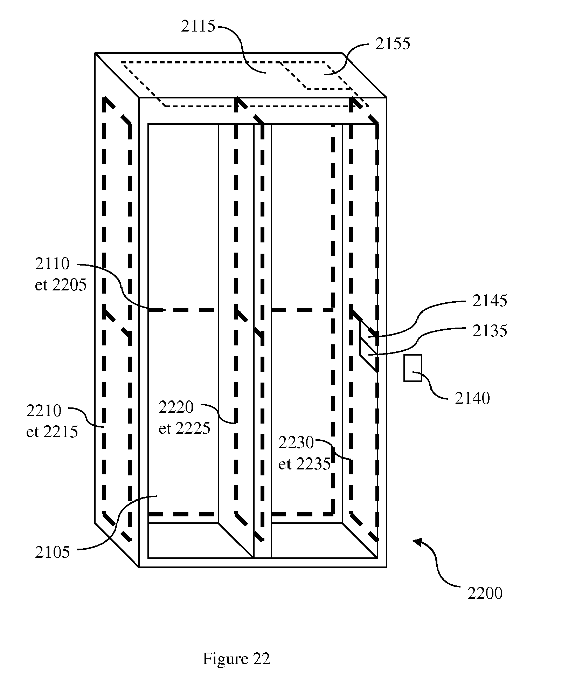

Les étiquettes électroniques 2160 et les circuits électroniques 2115 sont de type connu dans le domaine de l'identification radiofréquence (connu sous l'acronyme RFID pour RadioFrequence IDentification). Ils comportent, de manière connue en soi, un circuit de génération de signaux est adapté à générer successivement des signaux pour chaque antenne ou ensemble d'antenne incorporé dans le rayonnage (voir aussi la figure 22) et un circuit de réception de signaux modulant ledit champ magnétique.

Les circuits électroniques 2115 sont, par exemple, constitués d'un ordinateur et de circuits spécifiques au domaine des étiquettes électroniques RFID. Ils sont adaptés à fournir à l'antenne 2110, à des instants prédéterminés, un signal lui permettant de générer un champ électromagnétique. Ce champ électromagnétique sert à l'alimentation des étiquettes électroniques 2160 et à la transmission de messages, requêtes ou consignes aux étiquettes 2160. Les circuits électroniques 2115 sont aussi adaptés à détecter les signaux transmis par les étiquettes électroniques 2160, par modulation du champ magnétique émis par l'antenne 2110, à traiter ces signaux, à identifier les étiquettes électroniques et à transmettre ces identifiants aux moyens de communication 2155.

Les circuits électroniques 2115 sont aussi adaptés à traiter les signaux issus du lecteur 2135 de carte 2140 pour identifier un utilisateur et à commander l'affichage de l'afficheur 2145.

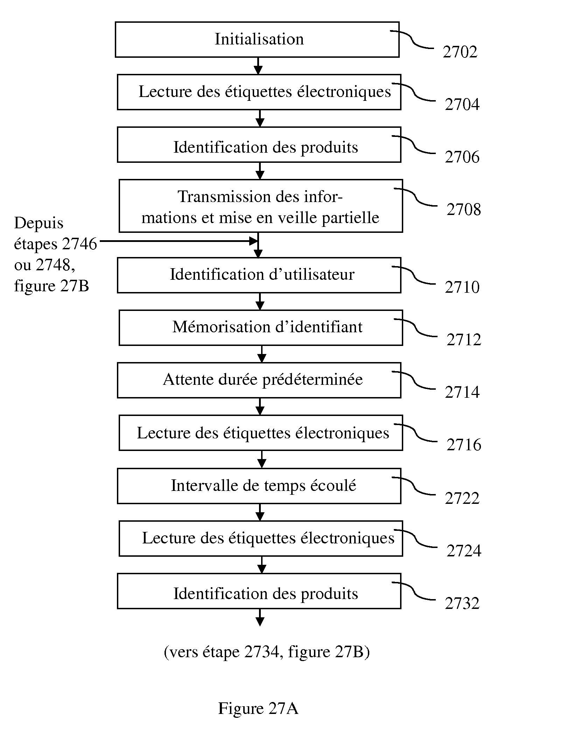

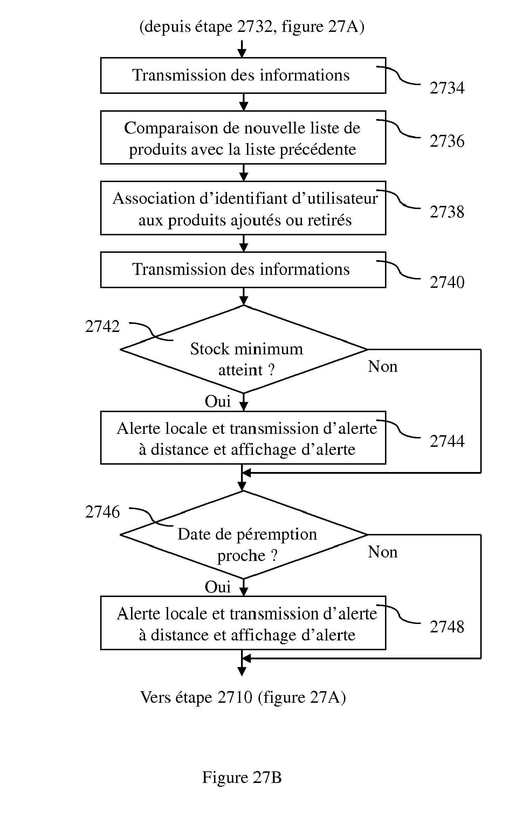

Le fonctionnement des circuits électroniques 2115 est détaillé en regard de la figure 27.

Le moyen de communication 2155 permet la communication à distance avec un ordinateur, un serveur ou un système informatique comportant un réseau, selon des techniques connues, sur support filaire ou non filaire. Le moyen de communication 2155 est, par exemple, un modem.

Le lecteur 2135 de carte d'identification 2140 est, par exemple, de type connu dans le domaine de l'identification radiofréquence. Dans ce cas, chaque carte 2140 comporte un transpondeur, ou étiquette électronique et le lecteur 2135 comporte une antenne d'émission et de réception de champs magnétiques modulés pour les échanges d'information nécessaires à l'identification des cartes 2140.

En variante, le lecteur 2135 est remplacé par un dispositif d'identification biométrique de type connu, pour identifier les utilisateurs qui accèdent au contenu du rayonnage 2100.

L'afficheur 2145 est de type connu, par exemple à écran à cristaux liquides (en anglais LCD pour Liquid Crystal Display) et permet d'afficher des messages visibles à destination des utilisateurs, par exemple des consignes pour leur identification, pour le positionnement des produits 2125 dans le rayonnage 2100 et pour afficher des alertes au cas où le nombre de produits d'une référence donnée atteint une valeur prédéterminée ou dans le cas où l'un des produits approche de sa date de péremption.

Préférentiellement, lorsque la paroi de fond supporte une antenne, on s'arrange pour que les étiquettes électroniques ne puissent pas être à proximité immédiate de cette antenne. Par exemple, un prévoit une surépaisseur de la paroi de fond avançant, devant chaque antenne, dans l'intérieur du rayonnage.

On observe, en figure 22, dans un rayonnage 2200, les mêmes éléments que dans la figure 21, les étagères et les produits n'ayant pas été représentés dans un but de clarté, auxquels s'ajoutent une antenne 2205, dans ou sur la paroi de fond 2105 du rayonnage 2200, et des antennes 2210, 2215, 2220, 2225, 2230 et 2235, placées deux à deux dans ou sur des parois latérales 2240 et 2245 et centrale 2250 du rayonnage 2200. Dans ce cas, les circuits électroniques 2115 sont adaptés à multiplexer les utilisations des antennes pour interroger successivement les étiquettes électroniques 2160 dont les antennes sont positionnées selon des axes orthogonaux.

On observe, en figure 23, qu'une première forme d'antenne 2300 incorporée dans un rayonnage illustré en figures 21 ou 22 est constituée d'un « 8 », c'est-à-dire de deux boucles 2305 et 2310 coplanaires, le conducteur constituant cette antenne parcourant alternativement l'une ou l'autre des deux boucles, avec des sens de rotation opposés. Dans cette figure, un bobinage seul a été représenté, étant entendu que l'antenne comporte, en réalité un grande nombre de bobinages superposés.

Ainsi, lorsque le courant parcourt les deux boucles coplanaires, sur l'une des boucles, il circule dans le sens des aiguilles d'une montre et, simultanément, sur l'autre boucle, il circule dans le sens inverse des aiguilles d'une montre. Cette configuration permet de générer un champ électromagnétique sur un volume allongé à proximité de la paroi de fond 2105 du rayonnage.

On observe, en figure 24, qu'une deuxième forme d'antenne 2400 incorporée dans un rayonnage illustré en figures 21 ou 22 est constituée de trois boucles 2405, 2410 et 2415 coplanaires, le conducteur constituant cette antenne parcourant alternativement les trois boucles, avec des sens de rotation alternativement dans le sens des aiguilles d'une montre et dans le sens opposé. Dans cette figure, un bobinage seul a été représenté, étant entendu que l'antenne comporte, en réalité un grande nombre de bobinages superposés.

Ainsi, lorsque le courant parcourt les trois boucles coplanaires, sur au moins une des boucles, il circule dans le sens des aiguilles d'une montre et, simultanément, sur au moins une autre boucle, il circule dans le sens inverse des aiguilles d'une montre. Cette configuration permet de générer un champ électromagnétique sur un volume allongé à proximité de la paroi de fond 2105 du rayonnage.

On observe, en figure 25, qu'une troisième forme d'antenne 2500 incorporée dans un rayonnage illustré en figures 21 ou 22 est constituée de quatre boucles 2505, 2510, 2515 et 2520 coplanaires, le conducteur constituant cette antenne parcourant alternativement les quatre boucles, avec des sens de rotation alternativement dans le sens des aiguilles d'une montre et dans le sens opposé. Dans cette figure, un bobinage seul a été représenté, étant entendu que l'antenne comporte, en réalité un grande nombre de bobinages superposés.

Ainsi, lorsque le courant parcourt les quatre boucles coplanaires, sur deux de ces boucles, il circule dans le sens des aiguilles d'une montre et, simultanément, sur deux autres boucles, il circule dans le sens inverse des aiguilles d'une montre. Cette configuration permet de générer un champ électromagnétique sur un volume allongé à proximité de la paroi de fond 2105 du rayonnage.

Dans le cas du rayonnage illustré en figure 22, par exemple, la paroi de fond supporte à la fois une antenne telle qu'illustrée en figure 23 et une antenne telle qu'illustrée en figure 24 et chaque paroi latérale ou centrale, supporte une antenne telle qu'illustrée en figure 23. Les inventeurs ont, en effet, découvert que cette configuration permettait de couvrir l'ensemble du volume intérieur du rayonnage 2200 sans laisser de zones mortes, avec les champs électromagnétiques successivement émis par les différentes antennes.

En variante des différents modes de réalisation du rayonnage objet de la présente invention, au moins une antenne est incorporée dans une étagère. Cette antenne comporte au moins deux boucles coplanaires sur au moins une desquelles le courant circule dans le sens des aiguilles d'une montre et, simultanément, sur au moins une autre boucle, le courant circule dans le sens inverse des aiguilles d'une montre. Par exemple, cette antenne est une des antennes illustrées en figures 23 à 25 ou une combinaison de telles antennes. Le circuit de génération de signaux 2115 est adapté à générer successivement des signaux pour différentes antennes liées à différentes étagères.

On observe, en figure 26, un produit 2125 comportant une étiquette papier 2165 et l'étiquette électronique 2160. Le produit comporte une partie métallique 2610, ici un sachet métallique ou métallisé, fine, c'est-à-dire qui possède une épaisseur inférieure à un quart de sa plus grande dimension, sur au moins un de ses bords 2605. L'étiquette électronique 2160 possède une antenne 2615 qui est positionnée sensiblement perpendiculairement à un bord fin de la partie métallique 2610.

L'antenne 2615 présente préférentiellement une largeur, mesurée dans le sens de l'épaisseur de la partie métallique 2610, supérieure à l'épaisseur du bord 2605 de la partie métallique en regard duquel l'antenne est positionnée.

Les inventeurs ont découvert que ces caractéristiques permettaient la lecture de l'étiquette électronique malgré la proximité entre la partie métallique est l'étiquette électronique.

Dans la figure 26, le produit 2125 est en forme de parallèlipipède rectangle et comporte l'étiquette électronique sur l'une des ses quatre faces les plus petites. Le produit 2125 comporte aussi une étiquette papier 2165 positionnée sur une face du produit opposée à la face du produit portant ladite étiquette électronique. L'étiquette papier 2165 porte ici la référence « duo M8H ».

En variante, l'étiquette papier 2165 est positionnée sur une face du produit adjacente à une face du produit portant ladite étiquette électronique 2160 par l'un de ses petits côtés.

Ainsi, lorsque l'utilisateur entrepose le produit 2125, en pile ou verticalement dans le rayonnage 2100 ou 2200, il est incité à le positionner de telle manière que son étiquette papier 2165 soit visible. Du fait de cette position, l'étiquette électronique 2160 est positionnée vers la paroi de fond du rayonnage ou vers l'une des étagères, ce qui permet la lecture des étiquettes électroniques 2165 par une antenne positionnée sur ou dans la paroi de fond ou une étagère, respectivement.

En effet, les inventeurs ont découvert que cette configuration permettait à la fois :

- à l'utilisateur de lire les indications portées par l'étiquette papier 2165, sans déplacer le produit 2125, et
- aux étiquettes électroniques 2160 de se trouver à proximité et en regard de l'antenne supportée par la paroi de fond 2105 du rayonnage ou par une étagère du rayonnage.

Lorsque le produit 2125 est plat, par exemple avec une épaisseur de 10 à 12 millimètres, l'étiquette électronique 2160 comporte préférentiellement une antenne 2615 de forme allongée, par exemple de 8 x 80 mm.

Comme on l'observe en figure 27, on effectue d'abord une étape d'initialisation 2702 au cours de laquelle on définit des associations entre :

- des identifiants d'étiquettes électroniques et des références de produits,
- des identifiants d'étiquettes électroniques et des délais de péremption des produits,
- des nombres minimums de produits de chaque référence en dessous desquels on doit déclencher un renouvellement de produits de cette référence et
- des identifications de cartes avec des identifications d'utilisateurs.

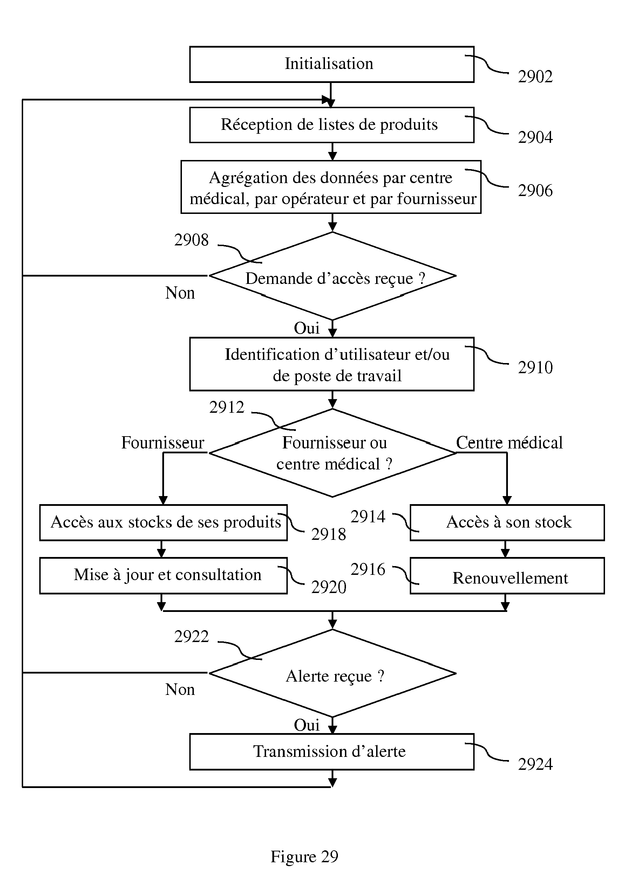

Cette étape 2702 peut être réalisée par lecture de données dans une base de données locale et/ou distante, comme indiqué en regard de la figure 29.

Puis, les circuits du rayonnage effectuent une première lecture des étiquettes électroniques présentes dans le rayonnage en générant successivement des champs magnétiques sur les différents ensembles d'antennes incorporés dans le rayonnage, étape 2704, les associent à des références de produit, étape 2706, transmettent ces informations à distance, étape 2708, et affichent, sur l'afficheur, les instructions d'utilisation du rayonnage.

Lorsqu'un utilisateur se présente pour ouvrir le rayonnage, il est identifié, étape 2710 et son identifiant est mémorisé, étape 2712.

A chaque fois qu'un utilisateur est identifié, on attend une durée prédéterminée, par exemple deux minutes, étape 2714 puis les étiquettes électroniques des produits présents dans le rayonnage sont lues, étape 2716, en mettant en oeuvre successivement les antennes du rayonnage.

A intervalles de temps réguliers, par exemple toutes les heures, intervalles mesurés au cours d'une étape 2722, les étiquettes électroniques des produits présents dans le rayonnage sont lues, étape 2724, en mettant en oeuvre successivement les antennes du rayonnage.

Après chaque lecture, on associe les identifiants des étiquettes électroniques à des références de produit, étape 2732 et on transmet ces informations à distance, étape 2734.

Puis, on compare la liste des produits présents avec la liste des produits précédemment présents, étape 2736, et on associe l'identification de l'utilisateur avec les références et identifiants des produits qui ont été ajoutés dans ou retirés du rayonnage, étape 2738 et on transmet ces informations à distance, étape 2740.

Puis, au cours d'une étape 2742, on détermine si, pour une ou plusieurs références de produits, le nombre de produits présents dans le rayonnage est inférieur ou égal à une valeur prédéterminée. Si oui, au cours d'une étape 2744, on déclenche une alerte locale, on transmet cette information à distance et on affiche, sur l'afficheur, les références des produits manquants.

Puis, si le résultat de l'étape 2742 est négatif ou à la suite de l'étape 2744, au cours d'une étape 2746, on détermine si au moins un produit présent dans le rayonnage possède une date de péremption dans un avenir de durée prédéterminée, par exemple un mois. Si oui, au cours d'une étape 2748, on déclenche une alerte locale, on transmet cette information à distance et on affiche, sur l'afficheur les références des produits concernés.

Puis, si le résultat de l'étape 2746 est négatif ou à la suite de l'étape 2748, les circuits du rayonnage affichent, sur l'afficheur, les instructions d'utilisation du rayonnage et on retourne à l'étape 2710.

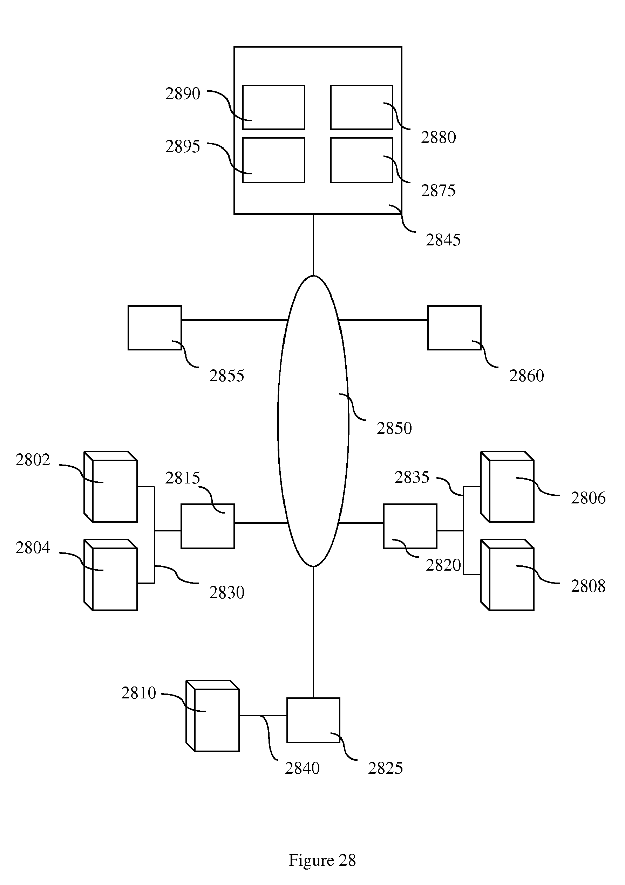

On observe, en figure 28, un système informatique 2800 comportant une pluralité de rayonnages 2802 à 2810, tels qu'illustrés en figures 21 ou 22 et reliés entre eux et à des postes de travail locaux 2815, 2820 et 2825, par des réseaux locaux, respectivement 2830, 2835 et 2840, un serveur 2845 relié auxdits réseaux locaux, par un réseau externe 2850 et des postes de travail externes 2855 et 2860 reliés, par l'intermédiaire du réseau externe 2850 au serveur 2845.

Les postes de travail 2815, 2820, 2825, 2855 et 2860, ainsi que le serveur 2845 sont de types connus et comportent, chacun, un microprocesseur et des moyens de communication, par exemple un modem, leur permettant de communiquer avec les réseaux auxquels ils sont directement reliés.

Les postes de travail locaux mettent en oeuvre plusieurs interfaces utilisateur pour connaître et gérer le stock des produits disponibles, commander des réassorts ou les paramètres de déclenchement de ces réassorts ou accéder à des catalogues de produits proposés par les différents fournisseurs et leur passer des commandes.

Le réseau externe 2850 est, par exemple, le réseau Internet.

Le serveur 2845 comporte, de plus, une base de données 2875, des moyens d'accès sélectifs 2880 à la base de données par les postes de travail 2815, 2820, 2825, 2855 et 2860, un programme informatique d'alerte 2890 et un programme informatique de suivi 2895.

La base de données 2875 contient des informations relatives aux produits contenus dans les rayonnages 2802 à 2810.

Les postes de travail 2855 et 2860 sont mis en oeuvre par des fournisseurs de produits susceptibles d'être stockés dans des rayonnages objets de la présente invention, préférentiellement muni d'étiquettes papier et d'étiquettes électroniques disposées sur des faces opposées de ces produits.

Le poste de travail 2815 et les rayonnages 2802 et 2804 se trouvent dans un premier centre utilisateur de produits et contiennent des produits provenant des fournisseurs mettant en oeuvre les postes de travail 2855 et 2860.

Le poste de travail 2820 et les rayonnages 2806 et 2808 se trouvent dans un deuxième centre utilisateur de produits et contiennent des produits provenant des fournisseurs mettant en oeuvre les postes de travail 2855 et 2860.

Le poste de travail 2825 et le rayonnage 2810 se trouvent dans un troisième centre utilisateur et contiennent des produits provenant des fournisseurs mettant en oeuvre les postes de travail 2855 et 2860.

Les moyens d'accès sélectifs 2880 à la base de données sont de type connu, par exemple logiciel d'authentification (par exemple à nom d'utilisateur et mot de passe ou à reconnaissance de carte ou biométrique) ou de signature et sont adaptés à permettre à chaque centre utilisateur de produits d'avoir accès à la totalité de son propre stock de produits contenus dans les rayonnages 2802 à 2810, quels que soient les fournisseurs de ceux-ci.

Les moyens d'accès sélectifs 2880 sont aussi adaptés à permettre à chaque fournisseur d'avoir accès, pour tous les centres utilisateurs de produits, à l'état du stock, dans les rayonnages 2802 à 2810, relatif à ses seuls produits.

Le programme informatique d'alerte 2890 est adapté à déclencher des alertes lorsqu'un nombre minimum de produits d'une référence déterminée est atteint dans le stock d'un centre utilisateur de produits. Cette alerte peut être utilisée pour augmenter le nombre de produits à renouveler dans le but d'éviter qu'une nouvelle alerte se reproduise.

Le programme informatique de suivi 2895 permet d'établir un suivi des ventes pour chaque fournisseur en donnant un récapitulatif des références par centre utilisateur de produits et/ou par territoire.

Chaque poste de travail d'un centre utilisateur de produits pouvant être connecté par Internet au serveur 2845, il peut s'identifier et recevoir des informations sur les produits en stock, c'est-à-dire entrant dans un rayonnage ou sortant d'un rayonnage du centre utilisateur de produits en question. Chaque poste de travail d'un centre utilisateur de produits peut aussi consulter les délais de livraison des produits stockés, en vue de gérer leur renouvellement.

Comme on l'observe en figure 29, on effectue d'abord une étape d'initialisation 2902 des différents dispositifs informatiques, au cours de laquelle on constitue la base de données des références de produits et de leurs fournisseurs ainsi que les moyens d'authentification des utilisateurs et/ou des différents postes de travail susceptibles d'accéder à la base de données.

Puis, au cours d'une étape 2904, chaque rayonnage fournit une première liste des produits qu'il contient, liste qui est automatiquement renouvelée après chaque lecture des étiquettes électroniques dans ces rayonnages et complétée par des alertes et des identifications d'utilisateurs, comme expliqué précédemment.

Au cours d'une étape 2906, le serveur agrège les données reçues par centre utilisateur de produits, par fournisseur et par utilisateur.

Au cours d'une étape 2908, le serveur détermine si une demande d'accès à la base de données a été reçue. Si non, on retourne à l'étape 2904. Si le résultat de l'étape 2908 est positif, au cours d'une étape 2910, on identifie l'utilisateur et/ou le poste de travail qui tente d'accéder à la base de données.

Si l'identification échoue, on retourne à l'étape 2904. Si l'identification réussit, au cours d'une étape 2912, on détermine si l'utilisateur et/ou le poste de travail qui tente d'accéder à la base de données est un poste de travail de centre utilisateur de produits ou un poste de travail de fournisseur.

S'il s'agit d'un centre utilisateur de produits, on lui donne accès à la totalité de son propre stock de produits contenus dans les rayonnages de ce centre utilisateur de produits, quels que soient les fournisseurs de ceux-ci, étape 2914.

On lui permet aussi, étape 2916, de renouveler des produits auprès des fournisseurs, auquel cas la demande de renouvellement est acheminée aux fournisseurs concernés. On lui permet aussi, au cours de cette étape 2916, de sélectionner sur catalogue et de commander des produits auprès du fournisseur, auquel cas la commande est acheminée aux fournisseurs concernés. A cet effet, le centre utilisateur de produits sélectionne, dans la base de données, les références et les quantités de produits, les bons de renouvellement ou de commande étant automatiquement répartis entre les fournisseurs des références concernées.

Si, au cours de l'étape 2912, on détermine que l'accès est effectué par un fournisseur, au cours d'une étape 2918, on permet à ce fournisseur d'avoir accès, simultanément pour tous les centres utilisateurs de produits, à l'état du stock, dans lesdits rayonnages, relatif à ses seuls produits.

On lui permet aussi, étape 2920, de mettre à jour son catalogue, ses références de produits, de prix et de délais de livraison et de consulter les bons de renouvellement ou de commande qui lui ont été passés. A cet effet, le serveur permet d'établir un suivi des ventes pour chaque fournisseur donnant un récapitulatif des références par centre utilisateur de produits et/ou par territoire, selon des techniques connues.

A la suite de l'une des étapes 2916 ou 2920, on détermine si une alerte a été reçue de la part d'un rayonnage, étape 2922, et, si oui, on fait suivre cette alerte au poste de travail du centre utilisateur de produits concerné, étape 2924. Puis, si le résultat de l'étape 2922 est négatif ou à la suite de l'étape 2924, on retourne à l'étape 2904.

Comme il ressort de ce qui précède, l'invention apporte une grande amélioration à la technique existante en fournissant une installation permettant d'assurer de façon simple et efficace la gestion de stock dans les centres utilisateurs de produits, ainsi que de gérer le flux de matériel entre les fournisseurs et ces centres utilisateurs de produits tout en permettant aux fournisseurs de gérer leur stock en dépôt dans chacun des centres utilisateur de produits.

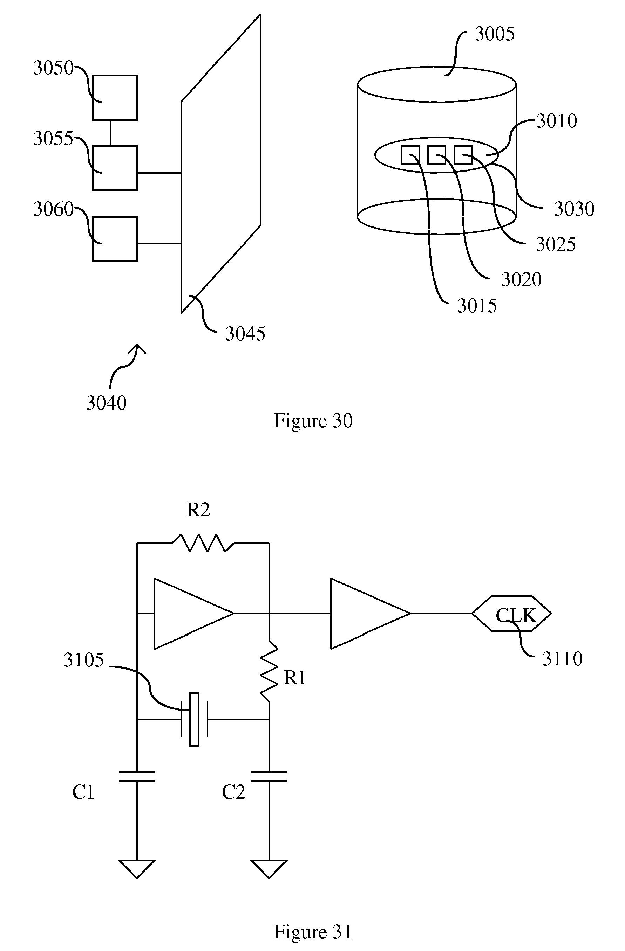

Les figures 30 à 38 concernent plus particulièrement les onzième à quatorzième aspects de la présente invention. Dans toute la description, on décrit le protocole de communication entre une station de base et une étiquette électronique, sans décrire :

- les éléments de gestion des requêtes d'interrogation qui permettent à la station de base de sélectionner les requêtes à émettre et à chaque étiquette électronique de sélectionner les requêtes qui la concernent (suivi d'une arborescence des possibles identifiants des étiquettes électroniques, par exemple),
- les éléments de gestion des réponses des étiquettes électroniques qui leur permettent de décider quand et comment répondre aux requêtes de la station de base et qui permettent à la station de base de gérer les réponses des étiquettes électroniques (inscription dans des bases de données, commandes d'inhibition provisoire ou définitive des étiquettes électroniques, déclenchement d'alarmes,

En effet, ces éléments sont bien connus de l'homme du métier des étiquettes électroniques, notamment RFID et font l'objet de nombreux brevets publiés.

On observe, en figure 30, un objet 3005 associé à une étiquette électronique 3010 qui comporte :

- une antenne 3030,
- un moyen de réception de signaux modulés à une première fréquence 3015,
- un moyen de traitement 3020 des signaux reçus par le moyen de réception, pour reconnaître un signal d'interrogation auquel ladite étiquette électronique doit répondre et
- un moyen d'émission de signaux modulés à une deuxième fréquence différente de ladite première fréquence 3025.

On observe aussi, en figure 30, une station de base 3040 pour interroger des étiquettes électroniques 3010, qui comporte :

- au moins une antenne 3045,
- un moyen d'émission de signaux modulés à une première fréquence 3060,
- un moyen de réception de signaux modulés à une deuxième fréquence différente de ladite première fréquence 3055 et
- un moyen de traitement desdits signaux modulés à la deuxième fréquence 3050 pour reconnaître un signal de réponse transmis par une étiquette électronique 3010.

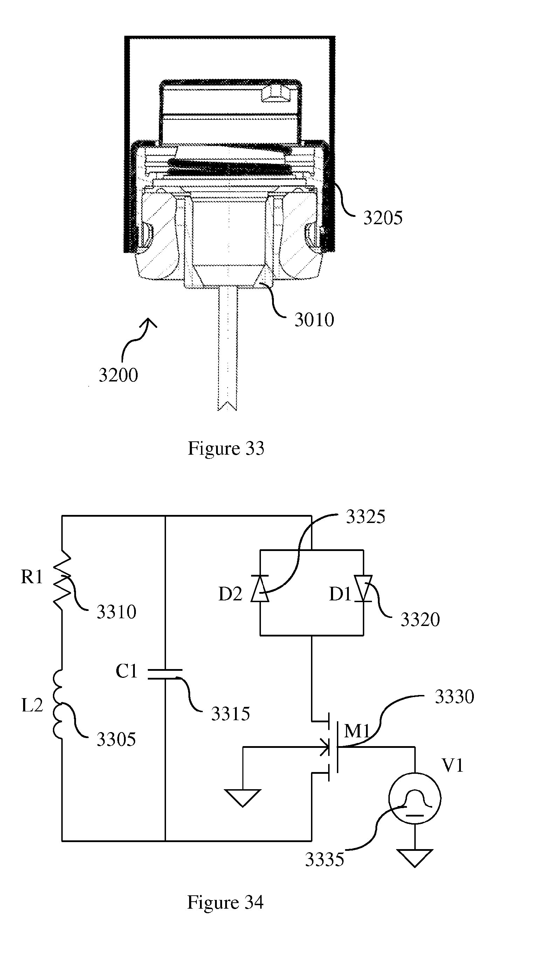

L'objet 3005 peut être de n'importe quel type. On suppose ici qu'il comporte des pièces métalliques qui influencent le champ magnétique entourant l'étiquette électronique 3010. L'antenne 3030 est de type connu. Elle est, par exemple circulaire et dotée de nombreuses spires pour augmenter sa sensibilité aux champs magnétiques générés par l'antenne 3045. Le moyen de réception 3015 et le moyen d'émission 3025 mettent en oeuvre l'antenne 3030 pour communiquer avec la station de base 3040. Le moyen d'émission est décrit en regard des figures 34 à 36.

En figure 30, une seule antenne 3045 est représentée. Cependant, dans de nombreux modes de réalisation de la présente invention, un ensemble d'antennes orientées différemment ou présentant des géométries différentes est mis en oeuvre pour que toute étiquette électronique présente dans un volume prédéterminé puisse être identifiée, quelle que soit sa position et son orientation dans ce volume.

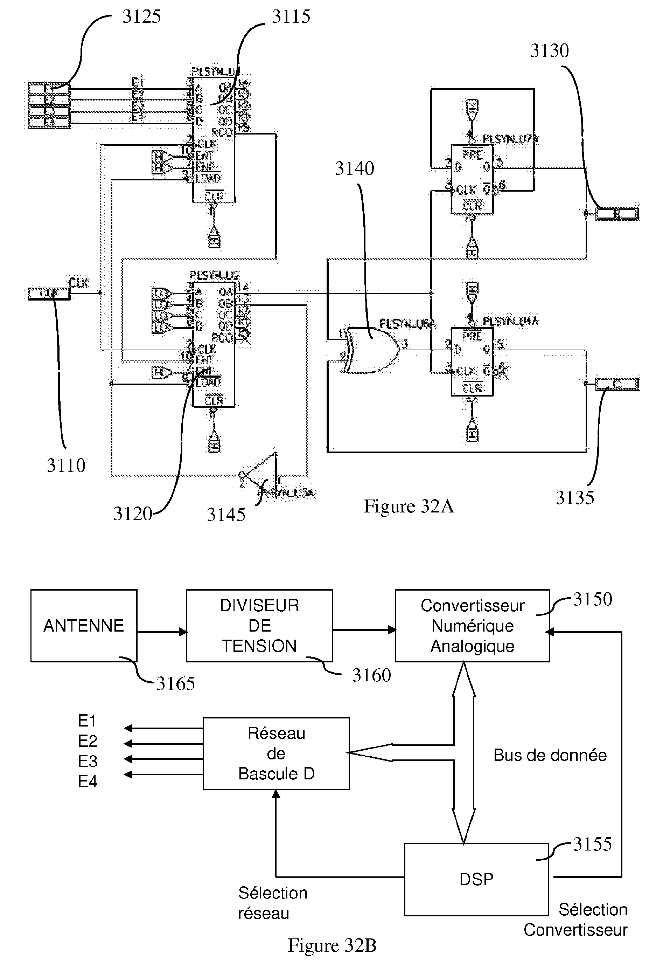

Le moyen d'émission 3060 est partiellement illustré en figure 31, 32A et 32B.

La mise en oeuvre d'une étiquette non résonnante permet de ne pas trop modifier ses caractéristiques électriques mais uniquement sa sensibilité, par rapport à la même étiquette utilisée en résonance.

Préférentiellement, la première fréquence est inférieure à 200 KHz et la deuxième fréquence est égale à la moitié de la première fréquence. La mise en oeuvre d'une première fréquence basse permet une meilleure pénétration du champ magnétique dans les parties métalliques de l'objet 3005. De plus, le choix de répondre à une deuxième fréquence deux fois plus faible que la première fréquence permet de détecter plus aisément cette fréquence sur l'antenne de la station de base 3045. De plus, un accord automatique peut permettre de garantir la présence du maximum d'énergie pour alimenter l'étiquette électronique 3010.

Comme on l'observe en regard des schémas électroniques des figures 31, 32A et 32B, l'électronique de la station de base permet d'avoir un accord automatique permettant de recevoir le champ magnétique maximal en fonction de la masse métallique et de sa position devant l'antenne. Pour cela on fait varier la fréquence de lecture en contrôlant l'amplitude de la tension sur l'antenne permettant de vérifier constamment que $LC\omega^2=1$.

A partir d'un quartz 3105, par exemple à 14.13838MHz, on génère une horloge à cette même fréquence (Figure 31) sur la sortie CLK 3110, avec un circuit électronique classique.

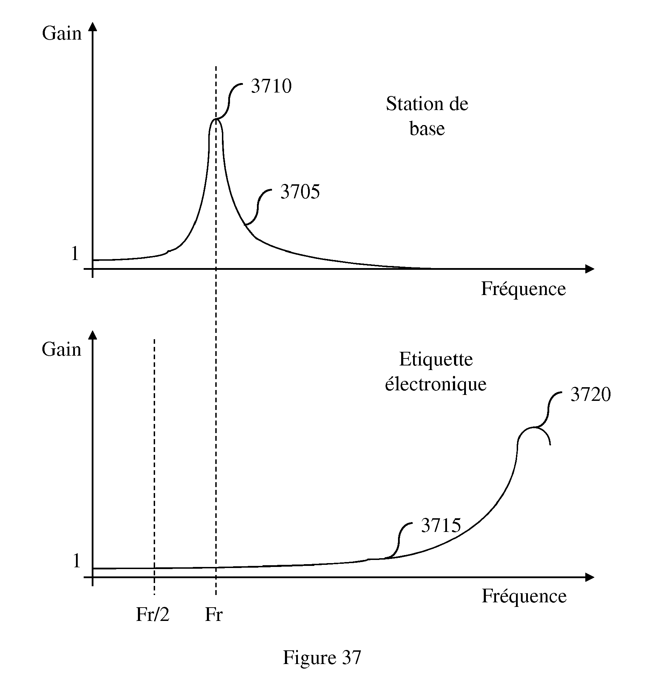

Puis, à l'aide du circuit logique illustré en figures 32A et 32B, on crée en fonction de la position des quatre entrées binaires 3125 pré-positionnables d'un compteur programmable 3115 (entrées E1, E2, E3 et E4), la deuxième fréquence de travail et son double correspondant à la première fréquence. Les valeurs des entrées E1, E2, E3 et E4 sont sélectionnées pour maximiser la tension V (voir figure 37).

N étant un nombre choisi sur les quatre entrées du compteur 3115 et F étant la fréquence du quartz 3105, on a :

$$F0\min = \frac{F}{4(33-N)} = \frac{14.31818}{4(33-0)} = 108.471 \, \text{kHz}$$

et

$$F0\max = \frac{F}{4(33-N)} = \frac{14.31818}{4(33-15)} = 198.863 \, \text{kHz}$$

F0min est la valeur minimale de la première fréquence et F0max est la valeur maximale de la première fréquence.

La première fréquence peut donc être positionnée de 108.470 Hz à 198.863 Hz par pas variables dont la moyenne est de 3.389 Hz. En fonction de la variation de fréquence et de la résolution souhaitée, il est possible de changer le quartz (Par exemple avec un quartz de 10 MHz la première fréquence peut-être positionnée de 75.757Hz à 138.888 Hz par pas variable dont la moyenne est de 2.367Hz.)

La figure 32A montre le câblage des compteurs 3115 et 3120. En sortie du compteur 3120, la fréquence est le quadruple de la première fréquence. Le composant 3140 est une porte « XOR » et le composant 3145 est un inverseur. La sortie 3130 « B » d'une bascule « D » est le double de la première fréquence, par exemple 125 KHz, cette dernière se trouvant sur le signal présent en sortie 3135 « C » d'une deuxième bascule « D ». Le circuit représenté en figure 32A permet ainsi d'avoir la première fréquence en sortie 3135. La sortie 3130 fournit la double fréquence, qui sert uniquement de signal de synchronisation dans la station de base.

Les composants 3115 et 3120 permettent de diviser une fréquence provenant d'un quartz selon la formule décrite (compteur, décompteur préchargeable). En changeant le quartz, la fréquence minimum (F0min et la fréquence maximale (F0max) peuvent être ajustées.

La station de base est dotée d'un moyen d'asservissement de la fréquence Fr du signal émis par l'antenne 3045 pour que cette fréquence Fr permette de respecter l'équation L x C x (2 x pi x Fr)$^2$ = 1, équation dans laquelle L est l'inductance du circuit d'émission comportant l'antenne et C est la capacité du circuit d'émission comportant l'antenne.

Pour réaliser l'asservissement, un convertisseur analogique numérique 3150 permet de rapatrier à un processeur de signal numérique (en anglais « DSP » pour digital signal processor) 3155, la valeur crête présente sur l'antenne d'émission. Cette valeur est prise après un pont diviseur 3160 ayant une forte impédance permettant à la fois de mettre le niveau de la consigne entre 0 et 10 V et de ne pas perturber l'accord de l'antenne 3165. Cette valeur est comparée, par le processeur de signal numérique 3155, à la consigne de tension acquise en absence de flacon métal puis le processeur de signal numérique 3155 fait varier la fréquence Fr pour rattraper le niveau de la consigne en faisant évoluer les quatre entrées du compteur 3115.

Dans le cas de l'association d'une étiquette électronique 3010 avec une pompe 3200 pour flacon de parfum, comme illustré en figure 33, l'étiquette électronique RFID 3010 est positionnée au coeur de la structure de la pompe, encerclée par les parties métalliques 3205 de la pompe, parties métalliques représentées par des zones sombres sur la figure 33.

Le principe de réponse des étiquettes est de moduler le signal de réponse à une deuxième fréquence inférieure à la première fréquence et, égale, ici à la moitié de la première fréquence.

Cette deuxième fréquence, égale à la moitié de la première fréquence, est préférentielle car c'est la fréquence portant le plus d'énergie et facilement réalisable par l'étiquette électronique 3010.

Pour cela le moyen d'émission 3025 de l'étiquette électronique 3010 module, ou « charge » une alternance sur deux de la porteuse (première fréquence) pour obtenir un signal de fréquence moitié. Du fait que l'horloge est conservée, l'étiquette électronique ne coupe que 80% du signal.

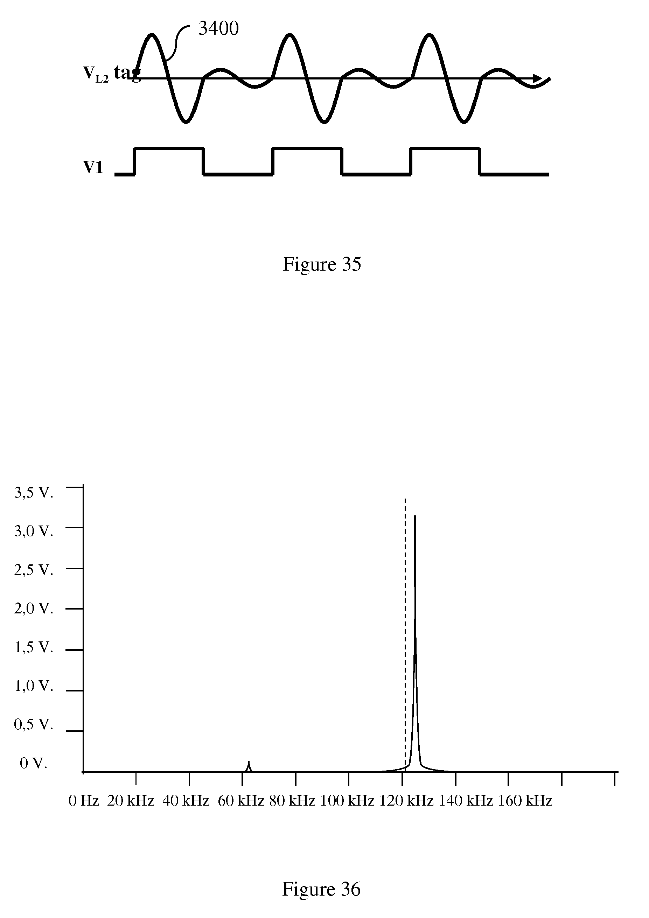

La figure 34 montre le montage qui permet de moduler l'antenne de l'étiquette formée par l'inductance L2 3305, une résistance série R1 3310 de l'antenne 3030 et une capacité parasite C1 3315 de l'antenne 3030, et deux diodes D1 3320 et D2 3325 qui garantissent au moins un minimum de signal à la première fréquence F0 sur l'antenne de l'étiquette électronique 3010. Le transistor de modulation M1 3330 fonctionne en interrupteur et la tension de commande V1 3335 est, dans le temps, telle que représentée en figure 35, avec une fréquence égale à la deuxième fréquence, soit 62,5 KHz.

Le signal $V_{L2}$ 3400 représenté en figure 35 montre la charge de la tension $V_{L2}$ quand V1 est à 1.

La figure 36 montre le spectre du signal présent sur l'étiquette électronique 3010 au moment de sa réponse : une raie de plus petite densité est présente à la deuxième fréquence. C'est cette deuxième fréquence qui est détectée par le moyen de réception 3055, par l'intermédiaire de l'antenne 3045 de la station de base 3040.

On rappelle qu'une antenne se comporte comme un circuit RLC comportant une inductance en série avec une résistance, l'inductance et la résistance étant en parallèle avec un condensateur. La fréquence de résonance Fr est telle que $L \times C \times (2 \times pi \times Fr)^2 = 1$. Le gain de l'antenne varie, en fonction de la fréquence émise en partant de la valeur 1 pour la fréquence nulle, en croissant jusqu'à la fréquence de résonance Fr puis en décroissant au delà. Par exemple, ce gain atteint 30 pour la fréquence de résonance Fr.

Pour ajuster la fréquence de résonance à la fréquence d'émission recherchée, on ajoute, en parallèle de l'antenne un condensateur.

On observe, en haut de la figure 37, la courbe 3705 du gain en fonction de la fréquence du signal fournit à l'antenne de la station de base.

Conformément à un aspect de la présente invention, le circuit d'alimentation de l'antenne de la station de base est adapté à compenser les variations de l'inductance dues à la présence de métal ou d'antennes d'étiquettes électroniques dans le champ d'émission de l'antenne en modifiant la fréquence d'émission afin de maintenir la relation $L \times C \times (2 \times pi \times Fr)^2 = 1$. Le gain de l'antenne d'émission reste ainsi sensiblement constant quelles que soit les perturbations rencontrées.

Ainsi, l'antenne émet toujours un signal possédant la fréquence de résonance, indiquée par le trait interrompu vertical et la référence 3710.

Conformément à un autre aspect de la présente invention, la fréquence de résonance de l'antenne de l'étiquette électronique est décalée par rapport à la fréquence du signal émis par la station de base. Préférentiellement, la fréquence de résonance de l'antenne de l'étiquette électronique est supérieure à la fréquence du signal émis par la station de base. Préférentiellement, la fréquence de résonance de l'antenne de l'étiquette électronique est au moins égale au double de la fréquence du signal émis par la station de base. On observe, en bas de la figure 37, la courbe 3715 du gain de l'antenne de l'étiquette électronique en fonction de la fréquence du signal reçu. On observe que la fréquence de résonance indiquée par la référence 3720 est supérieure au double de la fréquence reçue, correspondant à la référence 3710.

Par exemple, pour des signaux émis par la station de base possédant une fréquence entre 125 KHz et 225 KHz, la fréquence de résonance de l'antenne des étiquettes électroniques se trouve entre 400 KHz et 700 KHz.

Grâce à ces caractéristiques, le gain de l'antenne de l'étiquette électronique est voisin de 1 à la fréquence émise par l'antenne de la station de base et, par conséquent, à la fréquence de réponse de l'étiquette électronique, qui est, par exemple, la moitié de la fréquence du signal émis par la station de base, comme exposé en regard des figures 30 à 36.

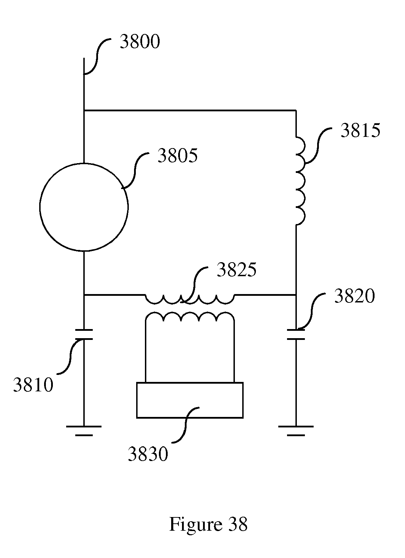

On observe, en figure 38, un schéma électronique d'un circuit de réception d'une station de base dans lequel le signal d'émission entre dans le circuit par l'entrée 3800 et parcours l'antenne 3805 en série avec un condensateur 3810. En parallèle de cette branche de circuit constituée par l'antenne 3805 et le condensateur 3810, un pont image permet de fournir la même tension intermédiaire que la tension présente entre l'antenne 3805 et le condensateur 3810. Le pont image comporte une inductance 3815 et un condensateur 3820. Les valeurs de l'inductance 3815 et du condensateur 3820 sont adaptées à ce que le courant parcourant ce pont image est très inférieur, par exemple dix fois plus faible, au courant parcourant l'antenne 3805.

Le circuit primaire d'un transformateur 3825 est relié, d'une part entre l'antenne 3805 et le condensateur 3810 et, d'autre part, entre l'inductance 3815 et le condensateur 3820. Le circuit secondaire du transformateur 3825 est relié à un circuit de filtrage et d'amplification 3830 dont la sortie est reliée aux circuits de traitement de la station de base qui traitent le signal provenant des étiquettes électroniques.

Grâce au pont image, les signaux reçu qui possèdent la fréquence d'émission des étiquettes électroniques, soit ici la moitié de la fréquence d'émission de la station de base, ne sont présents qu'entre l'antenne 3805 et le condensateur 3810, ce qui permet leur détection par le circuit de filtrage et d'amplification 3830. En revanche, les signaux possédant la fréquence d'émission de la station de base, dont on a vu, ci-dessus, qu'elle pouvait être variable, ne modifient pas l'égalité des tensions aux bornes du circuit primaire du transformateur 3825 et ne perturbent donc pas la détection des signaux reçus de la part des étiquettes électroniques.

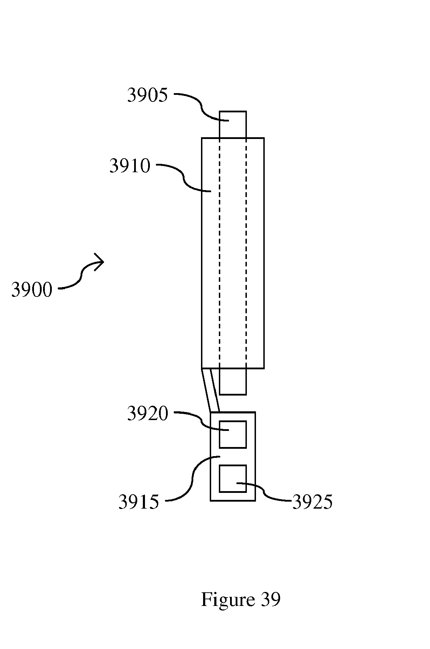

Les figures 39 à 43 concernent plus particulièrement les quinzième à dix-septième aspects de la présente invention. On observe, en figure 39, une étiquette électronique passive 3900 comportant :

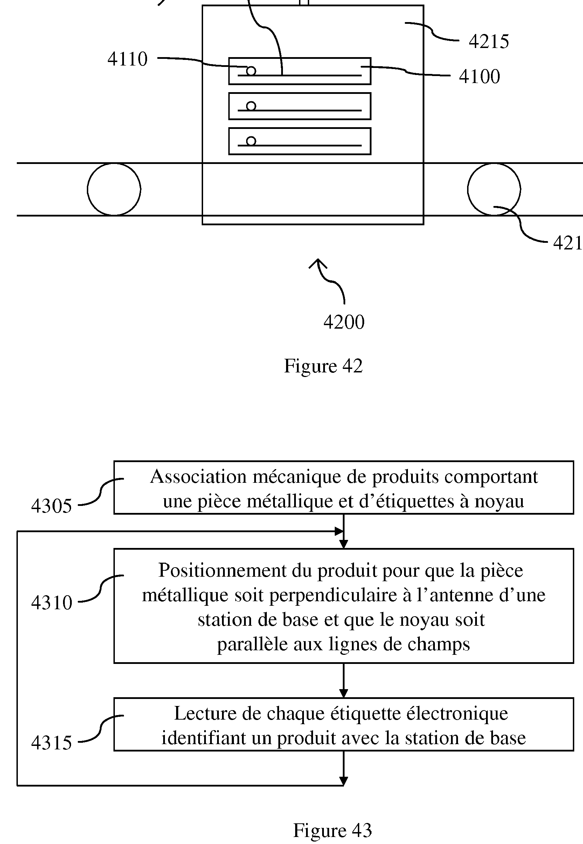

- un noyau 3905 de matériau isolant électrique possédant une perméabilité magnétique relative supérieure à cinquante,
- un bobinage 3910 entourant le noyau 3905, bobinage 3910 formant une antenne adaptée à recevoir un signal d'interrogation de la part d'une station de base (voir figure 42),
- un circuit électronique 3915 comportant une mémoire 3920 conservant un code d'identification et des moyens de traitement 3925 adaptés à traiter le signal d'interrogation en provenance de la station de base, à déterminer si l'étiquette électronique 3900 doit répondre et, si oui, à commander l'émission d'un signal par l'antenne 3910.

Le noyau 3905 est, par exemple, cylindrique de base circulaire. Préférentiellement, le noyau 3905 est constitué et comporte une ferrite. Aussi, dans la suite de la description on appelle « ferrite » le matériau isolant de haute perméabilité magnétique constituant le noyau, sans que cela ne soit limitatif.

Le fil conducteur formant le bobinage 3910 est, par exemple, thermo-adhérent.

Ainsi, la sensibilité de l'antenne 3910 est multipliée en fonction de la perméabilité magnétique relative du matériau constituant le noyau, valeur qui peut dépasser 250, voire 650, pour un noyau en ferrite, par rapport à la même antenne sans noyau de ferrite.

On rappelle que la sensibilité d'une étiquette RFID classique réalisée à partir d'une bobine de N spires de fils conducteurs, bobinée sur une surface moyenne S, est donnée par la relation classique :

$$B_{\min} = \frac{V_{a\,\lim}}{\omega NS} \cong \frac{3}{\omega NS} \quad (1)$$

où $\omega = 2\,\pi\,f$

f étant la fréquence de travail de la station de base.

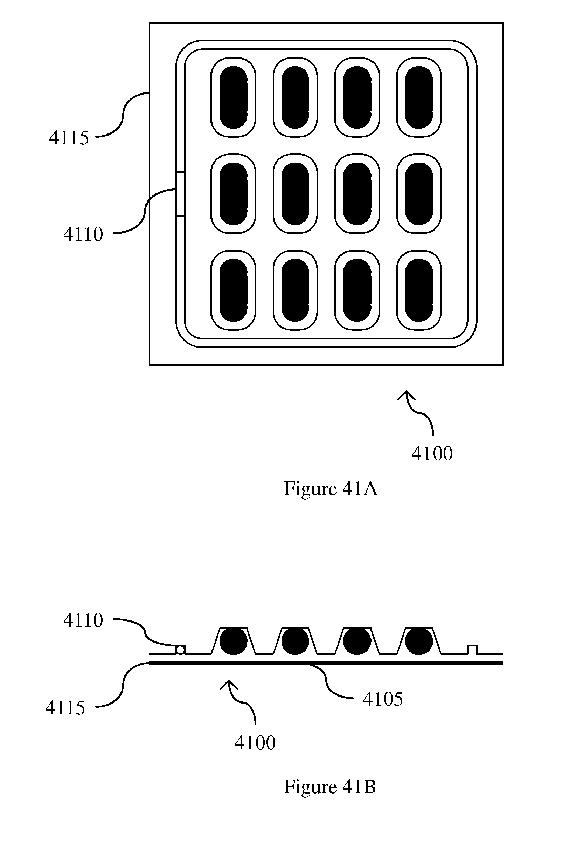

Selon la présente invention, on augmente la sensibilité de l'antenne 3910 de l'étiquette électronique 3900, de dimensions miniatures pour des raisons d'encombrement sur des produits de petites dimensions (voir figures 41A et 41 B), en bobinant l'antenne 3910 sur un noyau 3905, aussi appelé bâtonnet, de matériau isolant électrique possédant une perméabilité magnétique relative supérieure à cinquante, préférentiellement, une ferrite. Un tel matériau présente une perméabilité magnétique $\mu$ très nettement supérieure à celle des métaux non ferromagnétiques car cette perméabilité se compose de deux termes :

$\mu = \mu_0\mu_r$ (2)
Où $\mu_0$ est la perméabilité magnétique du vide $4\,\pi\,10^{-7}$
et où $\mu_r$ est la perméabilité magnétique relative du matériau, qui prend des valeurs qui peuvent atteindre plusieurs centaines (typiquement 250 ou 550).

Une ferrite présente également les caractéristiques d'un milieu isolant électrique puisque la conductivité électrique d'une ferrite est égale à zéro.

Les lignes de champ magnétique sont ainsi focalisées dans le noyau de ferrite, comme si la surface du noyau de ferrite était multipliée par la perméabilité magnétique relative $\mu_r$. Ainsi, le champ magnétique est guidé par le noyau de ferrite.

L'antenne ou inducteur de la station de base (voir figure 42) peut être définie par le rayon de son antenne supposée circulaire $R_1$, et par le nombre de spires de l'antenne de la station de base $N_1$.

En présente de ferrite entourée d'un bobinage de rayon $R_2$ présentant un nombre de spire $N_2$, placé à une distance D de l'antenne de la station de base, l'inductance de couplage mutuelle $M_{21}$ ou $M_{12}$ entre les deux antennes est donnée par la relation suivante :

$$M_{12} = \frac{\mu_0 \mu_r \pi R_1{}^2 R_2{}^2 N_1 N_2}{(D^2 + R_1{}^2)^{\frac{3}{2}}}$$

Ainsi, l'inductance de couplage mutuelle entre les deux bobines est, du fait de la présence du noyau 3905, multipliée par la perméabilité magnétique relative $\mu_r$.

La surface d'une antenne est fonction des paramètres géométriques de l'étiquette:

$$S = \frac{\pi}{12}\left(3D^2 - 3D\frac{N}{b}\Phi^2 + \frac{N^2}{b^2}\Phi^4\right)$$

avec N : nombre de spires

b : épaisseur de la bobine

$\Phi$ : diamètre du fil utilisé pour réaliser la bobine

L'inductance d'une bobine sans noyau est donnée par la relation ci-dessous à $\pm$ 5% près :

$$L = \mu_0 \pi \frac{a^2 N^2}{b + c + R} F' F''$$

$$F' = \frac{10b + 12c + 2R}{10b + 10c + 1.4R}$$

$$F'' = 0.5\log\left(100 + \frac{14R}{2b + 3c)}\right)$$

où R est le rayon externe de la bobine.

b son épaisseur.

a le rayon moyen.

c est le rayon interne.

Pour une bobine longue, F'et F''sont sensiblement égaux à 1.

Lorsque l'antenne est formée d'un bobinage sur un noyau de matériau isolant de perméabilité magnétique relative $\mu_r$, de diamètre $D_1$ et de longueur $L_2$, on bobine sur une longueur $L_1$, n spires. Le diamètre externe des spires est appelé $D_2$.

La surface du bobinage est A.

On peut alors écrire :

$$A = \pi \frac{D_2{}^2}{4}$$

$$R_m = \frac{L_1}{\mu A}$$

$$L = \frac{n^2}{R_m} = \frac{n^2 \mu A}{L_1}$$

Dans le mode de réalisation testé par les inventeurs, le fil utilisé est du fil de nature thermo-adhérente, du type 51/62 $\mu$m (51 $\mu$m de diamètre de cuivre gainé 62 $\mu$m) ou 20/25 $\mu$m.

Le nombre de spires est le produit du nombre de spires par couches par le nombre de couches. Pour un fil de diamètre de gaine d, le nombre de couche de fil est égal à $L_1$/d.

Le nombre de spires par couche est égal à $(D_2 - D_1)/(_2d)$.

Dans la pratique, tous les paramètres sont reliés les uns aux autres et ne sont pas indépendants. La réluctance Rm et la perméabilité magnétique $\mu$ sont donc délicats à mesurer.

Pour un noyau 3905 très perméable de longueur $L_2$ plongé dans un champ magnétique, les lignes de champs passeront dans ce noyau 3905 si le trajet dans l'air est égal à la longueur du noyau 3905. Toutes les lignes de champ dont la distance par rapport à l'axe du noyau 3905 est inférieure à $L_2/2$ passeront par le noyau 3905.

Ceci peut aussi être exprimé par « la surface équivalente d'une antenne ferrite de diamètre D et de longueur L est équivalente au mieux à L/D fois la sensibilité d'une étiquette de diamètre D. »

La perméabilité magnétique $\mu$ réelle dépend fortement du rapport entre la longueur du noyau 3905, le diamètre du noyau 3905 et la perméabilité magnétique relative $\mu_r$ du noyau 3905. La valeur de $\mu_r$ communiquée par le fabricant du noyau, par exemple de la ferrite, est la valeur asymptotique $\mu_{asymptotique}$ pour une ferrite très longue dont la longueur tend vers l'infini.

En pratique, on peut calculer une perméabilité magnétique effective $\mu_{effectif}$ du noyau 3905 après avoir défini la longueur du noyau 3905, son diamètre et la perméabilité correspondant à la valeur asymptotique $\mu_{asymptotique}$.

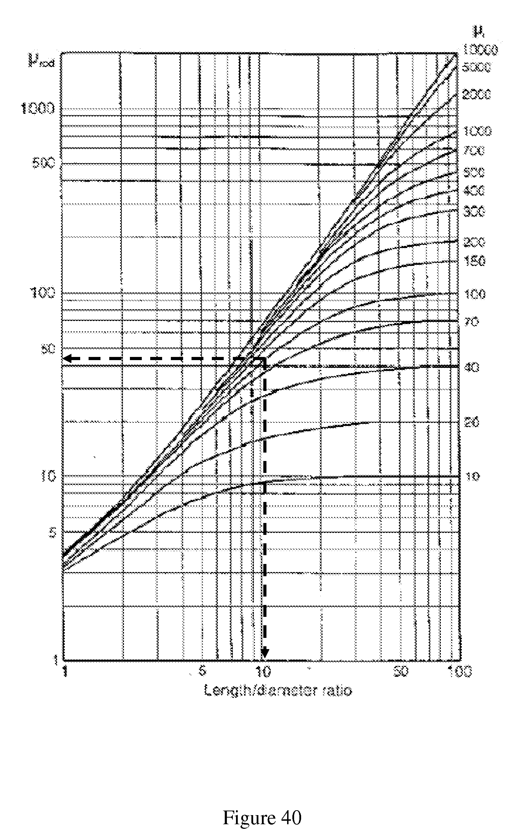

Le réseau de courbes illustré en figure 40 permet d'estimer rapidement la valeur effective du $\mu_r$, connaissant l et d. L'exemple marqué par des flèches perpendiculaires montre le passage de la perméabilité ferromagnétique asymptotique $\mu_{asymptotique}$ à la perméabilité magnétique effective $\mu_{effectif}$ pour un rapport l/d de 10.

Il est aussi possible de calculer la perméabilité magnétique effective $\mu_{effectif}$ en mesurant l'inductance d'une bobine réalisée sur noyau de ferrite et de mesurer ou de calculer l'inductance d'une bobine identique réalisée sans noyau de ferrite. Le ratio donne directement la valeur de la perméabilité magnétique p.

Par exemple, pour une bobine longue avec et sans ferrite dont on donne les caractéristiques ci-dessous :

La longueur b du bobinage est de 7 mm.
Le diamètre externe des spires est de 1,7 mm. et le rayon R vaut 0,85 mm.
Le diamètre interne est de 1 mm.
Le fil utilisé a un diamètre de 22 $\mu$m.
Enfin la bobine comporte 1.800 spires.

Pour effectuer le calcul de l'inductance dans l'air, on détermine que le diamètre interne est égal à la différence entre a - c/2, où c est égal à la différence du rayon externe et du rayon interne.

Donc c est égal à 175 $\mu$m

Et a vaut 325 $\mu$m.

Le nombre de couches de fils de cuivre est de 6 et le nombre de couches est de 300. Ces chiffres sont compatibles avec un nombre de spires égal à 1800.

L'inductance de la bobine sans noyau vaut approximativement 172 $\mu$H.

Les inventeurs ont mesuré une inductance de la bobine avec noyau de ferrite et trouvé une valeur de 16 mH.

On peut donc estimer que, pour cette bobine réalisée sur ferrite de 8 mm de longueur, la perméabilité magnétique effective $\mu_{effectif}$ est voisine de 93. La perméabilité magnétique $\mu_{asymptote}$ donnée par le fabricant est voisine de 650.

La sensibilité d'une étiquette électronique sans noyau peut être évaluée à environ 3,6 mT. En pratique, nous avons observé une valeur proche de 500 $\mu$T. Le gain de l'antenne doté d'un noyau de ferrite est ainsi très proche de 7 et confirme l'intérêt de la mise en oeuvre de la présente invention.

On observe que le poids d'une antenne réalisée sur ferrite peut, dans l'état actuel des offres commerciales, descendre jusqu'à 35 milligrammes.

On observe, en figures 41A et 41 B, un produit 4100 comportant une pièce métallique 4105 et une étiquette électronique 4110.

Lorsque l'on souhaite associé une étiquette électronique à une pièce métallique, par exemple le film métallique d'un blister, celui-ci, placé perpendiculairement à l'antenne émettrice d'une station de base, désadapte l'accord de cette antenne émettrice et se comporte comme un générateur de pertes qui atténue le courant électrique alimentant l'étiquette électronique. Une étiquette électronique placée à plat sur un blister peut être lue à courte distance mais il est utopique de lire une pile de blisters marquée de cette façon.

Conformément à un aspect de la présente invention, l'étiquette électronique 4110 est similaire à l'étiquette électronique 3900 détaillée en regard de la figure 39. Préférentiellement, l'antenne de l'étiquette électronique 4110 est positionnée à proximité et parallèlement à un bord 4115 de la pièce métallique 4105.

Dans le mode de réalisation décrit et représenté, la pièce métallique 4105 est un film métallique de blister comportant, en outre un film de matériau isolant , généralement, une matière plastique thermo-formée, le film métallique et le film de matériau isolant enfermant un contenu, par exemple des médicaments. Le produit 4100 est alors constitué de ce blister et, éventuellement, de son emballage non métallique, par exemple en carton ou en matière plastique.

Les blisters sont, très sommairement, équivalents à une plaque métallique, avec, tout autour du blister, une rigole formée dans un film en matériau isolant, généralement, une matière plastique thermo-formée. Ainsi, la rigole est, tout autour du produit, parallèle et à proximité d'un bord de la pièce métallique constituée du film métallique.

Préférentiellement, l'antenne de l'étiquette électronique est positionnée dans cette rigole.

Grâce à la mise en oeuvre de la présente invention, l'étiquette électronique 4110 peut être lue malgré la présence de pièces métalliques, même lorsque plusieurs produits similaires se trouvent en pile.

Le seizième aspect de la présente invention consiste ainsi à mettre en oeuvre une étiquette électronique comportant une antenne de très petites dimensions réalisée par bobinage d'un noyau de matériau isolant à haute perméabilité magnétique relative, par exemple une ferrite et, préférentiellement, à positionner ladite antenne parallèlement et à proximité d'un bord de la pièce métallique.

L'étiquette électronique placée dans la rigole faisant le tour du blister permet de marquer tous les types de blisters indépendamment de leur contenu. L'étiquette électronique peut être facilement déposée en automatique dans le blister en même temps que sont déposés les éléments de contenu, par exemple cachets ou gélules, conservées par le blister.

On observe, en figure 42, un dispositif d'identification 4200 d'au moins un produit 4100, qui comporte une station de base 4205 et un moyen de présentation 4210 de produits 4100. La station de base 4205 comporte une antenne émettrice 4215 présentant un plan principal. Par exemple l'antenne émettrice 4215 est plane.

Conformément à un aspect de la présente invention, le plan principal de l'antenne émettrice 4215 est placé perpendiculairement au plan de la pièce métallique 4105 et l'antenne émettrice 4215 est adaptée à former des lignes de champ magnétique parallèles au noyau de l'antenne de l'étiquette électronique 4110 portée par le produit 4100.

Dans une première variante, le moyen de présentation 4210 est adapté à présenter un produit 4110 à la fois en regard de l'antenne émettrice 4215 de telle manière que le plan de la pièce métallique 4105 soit perpendiculaire au plan principal de l'antenne émettrice 4215 et que le noyau de l'antenne de l'étiquette électronique 4110 portée par le produit 4100 soit sensiblement parallèle aux lignes de champs générées par l'antenne émettrice 4215.

Dans une deuxième variante, le moyen de présentation 4210 est adapté à présenter, à la fois, une pluralité de produits 4100 constituant une pile en regard de l'antenne émettrice 4215 de telle manière que le plan de chaque pièce métallique 4105 soit perpendiculaire au plan principal de l'antenne émettrice 4215 et que le noyau de l'antenne de l'étiquette électronique 4110 portée par chaque produit 4100 soit sensiblement parallèle aux lignes de champs générées par l'antenne émettrice 4215.

Par exemple, le moyen de présentation 4215 est un bras manipulateur, par exemple un bras robotisé ou un convoyeur.

Dans le cas où les produits 4100 comportent des blisters, ceux-ci sont ainsi placés perpendiculairement à l'antenne émettrice 4215 et ne créant donc que peu de perturbation du champ émis par l'antenne émettrice 4215.

L'étiquette électronique 4110 de chaque produit 4100 est de très petites dimensions mais est alimenté sans difficulté par l'antenne émettrice 4215 perpendiculaire aux blisters.

Une pile de blisters est ainsi identifiée sans difficulté.

On observe, en figure 43, des étapes d'un procédé d'identification d'au moins un produit comportant une pièce métallique sensiblement plane.

Au cours d'une étape d'association mécanique 4305, on associe au produit une étiquette électronique positionnée à proximité et parallèlement à un bord de ladite pièce métallique, ladite étiquette électronique comportant un noyau de matériau isolant électrique possédant une perméabilité magnétique relative supérieure à cinquante, un bobinage entourant ledit noyau, bobinage formant une antenne adaptée à recevoir un signal d'interrogation de la part d'une station de base, une mémoire conservant un code d'identification et des moyens de traitement adaptés à traiter le signal d'interrogation en provenance de la station de base, à déterminer si l'étiquette électronique doit répondre et, si oui, à commander l'émission d'un signal par ladite antenne.

Lorsque le produit est de type blister, au cours de l'étape 4305, l'étiquette électronique est déposée en automatique dans la rigole du blister en même temps que sont déposés les éléments de contenu, par exemple cachets ou gélules, conservées par le blister.

Au cours d'une étape de positionnement 4310, on positionne le produit en regard d'une antenne émettrice pour que le plan principal de l'antenne émettrice soit placé perpendiculairement au plan de ladite pièce métallique, et que le noyau soit placé parallèlement aux lignes de champ magnétique générées par ladite antenne émettrice.

Au cours d'une étape 4315, on lit, avec une station de base, conjointement, selon des techniques connues, déterministes ou avec anti-collision, les identifications des étiquettes électroniques associées aux produits.

Comme exposé en regard des figures 39 à 42, ce procédé permet l'identification des produits malgré la présence d'une pièce métallique en leur sein, malgré la petite dimension imposée à l'étiquette électronique et, éventuellement, malgré la présentation des produits par piles de produits.

Les différents aspects de la présente invention, leurs caractéristiques essentielles et leurs caractéristiques particulières sont destinés à être combinés pour former un système universel de lecture d'étiquettes électroniques. Chaque caractéristique essentielle ou particulière de chaque aspect de la présente invention constitue donc une caractéristiques particulière de chaque autre aspect de la présente invention.

**Revendications**

1. - Produit comportant une pièce métallique sensiblement plane au moins localement, **caractérisé en ce qu'**il comporte une étiquette électronique dont l'antenne est positionnée à proximité de ladite pièce métallique, l'axe de ladite antenne étant parallèle au plan local de ladite pièce métallique.

2. - Produit selon la revendication 1, **caractérisé en ce que** l'antenne de ladite étiquette électronique est positionnée à proximité et parallèlement à un bord de ladite pièce métallique.

3. - Produit selon l'une quelconque des revendications 1 ou 2, **caractérisé en ce que** ladite pièce métallique est un film métallique de blister.

4. - Produit selon l'une quelconque des revendications 1 à 3, **caractérisé en ce qu'**il comporte une rigole formée dans un matériau non conducteur, parallèle et à proximité d'un bord de la ladite pièce métallique, l'antenne de ladite étiquette électronique étant positionnée dans ladite rigole.

5. - Produit selon l'une quelconque des revendications 1 à 4, **caractérisé en ce que** ladite étiquette électronique comporte :

   - un noyau de matériau isolant électrique possédant une perméabilité magnétique relative supérieure à cinquante,
   - un bobinage entourant ledit noyau, bobinage formant une antenne adaptée à recevoir un signal d'interrogation de la part d'une station de base,
   - une mémoire conservant un code d'identification et
   - des moyens de traitement adaptés à traiter le signal d'interrogation en provenance de la station de base, à déterminer si l'étiquette électronique doit répondre et, si oui, à commander l'émission d'un signal par ladite antenne.

6. - Produit selon la revendication 5, **caractérisé en ce que** ledit noyau comporte une ferrite.

7. - Produit selon l'une quelconque des revendications 5 ou 6, **caractérisé en ce que** le fil de bobinage est thermo-adhérent.

8. - Produit selon l'une quelconque des revendications 5 à 7, **caractérisée en ce que** ladite étiquette est passive.

9. - Dispositif d'identification d'au moins un produit selon l'une quelconque des revendications 1 à 8, produit comportant une pièce métallique sensiblement plane, **caractérisé en ce qu'**il comporte une antenne émettrice adaptée à générer des lignes de champ magnétique parallèles à l'axe de ladite antenne de l'étiquette électronique.

10. - Dispositif selon la revendication 9, **caractérisé en ce qu'**il comporte un moyen de présentation pour présenter un produit à la fois en regard de ladite antenne émettrice de telle manière que le plan de ladite pièce métallique soit perpendiculaire au plan principal de ladite antenne émettrice et que le noyau de l'étiquette électronique portée par ledit produit soit sensiblement parallèle aux lignes de champs générés par ladite antenne émettrice.

11. - Dispositif selon la revendication 9, **caractérisé en ce qu'**il comporte un moyen de présentation pour présenter une pluralité de produits constituant au moins une pile en regard de ladite antenne émettrice de telle manière que le plan de chaque pièce métallique soit perpendiculaire au plan principal de ladite antenne émettrice et que les noyaux des étiquettes électroniques portées par lesdits produits soient sensiblement parallèles aux lignes de champs générées par ladite antenne émettrice.

**12.** - Dispositif selon l'une quelconque des revendications 10 ou 11, **caractérisé en ce que** ledit moyen de présentation est un convoyeur.

**13.** - Procédé d'identification d'au moins un produit comportant une pièce métallique sensiblement plane, **caractérisé en ce qu'**il comporte :

- une étape d'association mécanique audit produit d'une étiquette électronique dont l'antenne est perpendiculaire au plan de ladite pièce mécanique et
- une étape de positionnement dudit produit en regard d'une antenne émettrice de la station de base pour que l'antenne émettrice génère des lignes de champ magnétique parallèles à l'axe de ladite antenne de l'étiquette électronique.

Figure 1

Figure 2

Figure 3

Figure 4

Figure 5

Figure 6

Figure 7

815

880

805

890

820

810

885

Figure 8

820

910

900

Figure 9

Figure 10

Figure 11

1270

1260

1270  1270

1220

820

1210

Figure 12

820  820

1370

1370  1370

1310

1360

1320

Figure 13

Figure 14

1510

vdd

Ic

1515

M

1525

1540

Vp

1535

K1

1520

Im

C

1530

1535

K2

1505

gnd

Figure 15A

1540

1545

Vp

Vref

1550

+

−

1555

Vout

Figure 15B

Figure 16

Champs/temps

1440                  Requête de sortie d'inhibition

1445                  Requête de sortie d'inhibition

1450                  Requête de sortie d'inhibition

1440

1445

1450     Inhibition

       Succès

1440      Lecture           Inhibition           Inhibition

                 Succès                 Succès

1445                  Lecture                 Lecture

                               Inhibition

                            Succès         Echec

1450                             Lecture       Lecture

Etiquettes   1415          1420          1425          1430

Figure 17

Figure 18

1905

1800

1850

1920

1910

1860

1900

Figure 19

1800

1860

1870

1850

2005

2010

2000

Figure 20

Figure 21

2115
2155
2110
et 2205
2145
2135
2140
2210
et 2215
2220
et 2225
2230
et 2235
2105
2200

Figure 22

EP 2 393 044 A1

2305

2310

Figure 23

2405

2410

2415

Figure 24

2505

2510

2515

2520

Figure 25

oub
H8M

2165

2610

2125

2605

2160

2615

Figure 26

41

Figure 27A

(depuis étape 2732, figure 27A)

```
┌─────────────────────────────────┐
│  Transmission des informations  │ ─── 2734
└─────────────────────────────────┘
                 │
┌─────────────────────────────────┐
│  Comparaison de nouvelle liste de │ ─── 2736
│  produits avec la liste précédente │
└─────────────────────────────────┘
                 │
┌─────────────────────────────────┐
│ Association d'identifiant d'utilisateur │ ─── 2738
│   aux produits ajoutés ou retirés │
└─────────────────────────────────┘
                 │
┌─────────────────────────────────┐
│  Transmission des informations  │ ─── 2740
└─────────────────────────────────┘
                 │
        2742 ◇ Stock minimum ◇ ── Non ──┐
              atteint ?                   │
                 │ Oui                    │
┌─────────────────────────────────┐      │
│ Alerte locale et transmission d'alerte │ ─── 2744  │
│  à distance et affichage d'alerte │      │
└─────────────────────────────────┘      │
                 │◄─────────────────────┘
        2746 ◇ Date de péremption ◇ ── Non ──┐
               proche ?                       │
                 │ Oui                        │
┌─────────────────────────────────┐          │
│ Alerte locale et transmission d'alerte │ ─── 2748  │
│  à distance et affichage d'alerte │          │
└─────────────────────────────────┘          │
                 │◄─────────────────────────┘
```

Vers étape 2710 (figure 27A)

Figure 27B

Figure 28

Figure 29

Figure 30

Figure 31

Figure 32A

Figure 32B

Figure 33

Figure 34

3400

$V_{L2}$ tag

V1

Figure 35

3,5 V.
3,0 V.
2,5 V.
2,0 V.
1,5 V.
1,0 V.
0,5 V.
0 V.

0 Hz  20 kHz  40 kHz  60 kHz  80 kHz  100 kHz  120 kHz  140 kHz  160 kHz

Figure 36

Figure 37

Figure 38

3905

3910

3900

3920

3915

3925

Figure 39

Figure 40

4115

4110

4100

Figure 41A

4110

4115

4105

4100

Figure 41B

4215

4110

4100

421

4200

Figure 42

4305 — Association mécanique de produits comportant une pièce métallique et d'étiquettes à noyau

4310 — Positionnement du produit pour que la pièce métallique soit perpendiculaire à l'antenne d'une station de base et que le noyau soit parallèle aux lignes de champs

4315 — Lecture de chaque étiquette électronique identifiant un produit avec la station de base

Figure 43

# EP 2 393 044 A1

Europäisches
Patentamt

European
Patent Office

Office européen
des brevets

**RAPPORT DE RECHERCHE EUROPEENNE**

Numéro de la demande

EP 10 18 4928

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2005 112378 A (CKD CORP) 28 avril 2005 (2005-04-28) * abrégé; figures 3,5-7 * ----- | 1-13 | INV. G06K19/077 G06K7/10 H01Q7/08 H01Q1/22 H01Q1/44 G06K19/07 G06K7/00 H01F5/00 H01Q7/00 |
| X | EP 1 061 663 A1 (MITSUBISHI MATERIALS CORP [JP]) 20 décembre 2000 (2000-12-20) * alinéas [0001] - [0014], [0071] - [0118]; figures 2,5,6 * ----- | 1-13 | |
| X | DE 195 34 229 A1 (LICENTIA GMBH [DE]) 20 mars 1997 (1997-03-20) * colonne 2, ligne 38-52; figure 4 * ----- | 1-13 | |
| X | EP 1 484 816 A1 (MITSUBISHI MATERIALS CORP [JP]) 8 décembre 2004 (2004-12-08) * le document en entier * ----- | 1-13 | |
| X | EP 1 318 437 A1 (EM MICROELECTRONIC MARIN SA [CH]) 11 juin 2003 (2003-06-11) * le document en entier * ----- | 1-13 | |
| A | EP 1 288 016 A1 (HANEX CO LTD [JP]) 5 mars 2003 (2003-03-05) * le document en entier * ----- | 1-13 | DOMAINES TECHNIQUES RECHERCHES (IPC) G06K H01Q B65B B65D |

Le présent rapport a été établi pour toutes les revendications

| Lieu de la recherche | Date d'achèvement de la recherche | Examinateur |
|---|---|---|
| La Haye | 31 octobre 2011 | Fredj, Aziz |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 18 4928

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-10-2011

| Document brevet cité au rapport de recherche | | | Date de publication | Membre(s) de la famille de brevet(s) | | | Date de publication |
|---|---|---|---|---|---|---|---|
| JP | 2005112378 | A | 28-04-2005 | JP | 4030947 | B2 | 09-01-2008 |
| EP | 1061663 | A1 | 20-12-2000 | WO | 0028674 | A1 | 18-05-2000 |
| | | | | JP | 2000151480 | A | 30-05-2000 |
| DE | 19534229 | A1 | 20-03-1997 | DK | 850426 | T3 | 15-04-2002 |
| | | | | WO | 9710520 | A1 | 20-03-1997 |
| | | | | EP | 0850426 | A1 | 01-07-1998 |
| | | | | JP | H11512519 | A | 26-10-1999 |
| | | | | JP | 3743805 | B2 | 08-02-2006 |
| | | | | US | 6249258 | B1 | 19-06-2001 |
| EP | 1484816 | A1 | 08-12-2004 | CN | 1639911 | A | 13-07-2005 |
| | | | | WO | 03061069 | A1 | 24-07-2003 |
| | | | | JP | 3896965 | B2 | 22-03-2007 |
| | | | | JP | 2004166175 | A | 10-06-2004 |
| | | | | TW | I258710 | B | 21-07-2006 |
| | | | | US | 2005162331 | A1 | 28-07-2005 |
| EP | 1318437 | A1 | 11-06-2003 | AUCUN | | | |
| EP | 1288016 | A1 | 05-03-2003 | BR | 0205216 | A | 24-06-2003 |
| | | | | CN | 1463229 | A | 24-12-2003 |
| | | | | WO | 02055315 | A1 | 18-07-2002 |
| | | | | TW | 531976 | B | 11-05-2003 |
| | | | | US | 2003179151 | A1 | 25-09-2003 |

EPO FORM P0460

Pour tout renseignement concernant cette annexe : voir Journal Officiel de l'Office européen des brevets, No.12/82